(19) Europäisches Patentamt / European Patent Office / Office européen des brevets

(11) **EP 3 789 362 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **20194385.9**

(22) Anmeldetag: **03.09.2020**

(51) Internationale Patentklassifikation (IPC):
*C04B 28/18* (2006.01)    *C04B 38/02* (2006.01)
*C04B 38/10* (2006.01)    *C04B 111/10* (2006.01)

(52) Gemeinsame Patentklassifikation (CPC):
(C-Sets verfügbar)
**C04B 28/18; C04B 38/02; C04B 38/10;**
C04B 2111/10; C04B 2111/1018; C04B 2201/20;
Y02P 40/60; Y02W 30/91      (Forts.)

(54) **VERFAHREN ZUR HERSTELLUNG VON HYDROTHERMAL GEHÄRTETEN POREN- ODER SCHAUMBETONFORMKÖRPERN**

METHOD FOR THE PREPARATION OF HYDROTHERMALLY CURED POROUS OR FOAMED CONCRETE MOULDS

PROCÉDÉ DE FABRICATION DE CORPS MOULÉS EN BÉTON CELLULAIRE AUTOCLAVÉ OU CELLULAIRE DURCIS PAR VOIE HYDROTHERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2019 DE 102019213361**

(43) Veröffentlichungstag der Anmeldung:
**10.03.2021 Patentblatt 2021/10**

(73) Patentinhaber: **Xella Baustoffe GmbH**
**47259 Duisburg (DE)**

(72) Erfinder: **STUMM, Andreas**
**14476 Potsdam (DE)**

(74) Vertreter: **Dr. Solf & Zapf**
**Patent- und Rechtsanwalts PartG mbB**
**Candidplatz 15**
**81543 München (DE)**

(56) Entgegenhaltungen:
EP-A1- 2 163 534    EP-A1- 3 235 794
EP-A1- 3 599 228    WO-A1-2009/121635
AT-B- 184 504    CH-A- 499 469
DE-A1- 19 854 477    DE-B- 1 072 539

- AUXI BARBUDO ET AL: "Correlation analysis between sulphate content and leaching of sulphates in recycled aggregates from construction and demolition wastes", WASTE MANAGEMENT, ELSEVIER, NEW YORK, NY, US, vol. 32, no. 6, 7 February 2012 (2012-02-07), pages 1229 - 1235, XP028416237, ISSN: 0956-053X, [retrieved on 20120216], DOI: 10.1016/J.WASMAN.2012.02.005

(52) Gemeinsame Patentklassifikation (CPC): (Forts.)

C-Sets
**C04B 28/18, C04B 7/02, C04B 14/06, C04B 18/167, C04B 20/008, C04B 38/02, C04B 38/10, C04B 38/106, C04B 40/024**

## Beschreibung

Die vorliegende Erfindung betrifft ein Verfahren zur Herstellung von sulfatarmen, vorzugsweise sulfatfreien, hydrothermal gehärteten Poren- oder Schaumbetonformkörpern, insbesondere in Form von Poren- oder Schaumbetonsteinen. Besonders bevorzugt sollen Porenbetonsteine genormter Güteklassen bezüglich Festigkeit und Rohdichte nach DIN EN 771-4:2015-11 in Kombination mit DIN 20000-404: 2018-04 mit Rohdichten von 305 bis 1000 kg/m$^3$ hergestellt werden. Es können aber auch nicht genormte Steine z.B. mit einer Rohdichte zwischen 200 und < 305 kg/m$^3$ und Poren- oder Schaumbetondämmmaterial, bevorzugt Poren- oder Schaumbetondämmplatten, mit einer Rohdichte zwischen z.B. 70 und < 200 kg/m$^3$, bevorzugt 70 und 150 kg/m$^3$ hergestellt werden. Des Weiteren können auch bewehrte Poren- oder Schaumbetonformbauteile mit Rohdichten wie die genormten oder ungenormten Poren- oder Schaumbetonsteine hergestellt werden.

Porenbetonformkörper bestehen aus hydrothermal gehärtetem, porosiertem Calciumsilikathydratmaterial. Sie werden hergestellt aus einer wässrigen Mischung bzw. Frischbetonmasse, welche mindestens eine im Hydrothermalprozess reaktionsfähige CaO-Komponente und mindestens eine im Hydrothermalprozess reaktionsfähige SiO$_2$-Komponente, ein Treibmittel, insbesondere Aluminiumpulver und/oder -paste, sowie gegebenenfalls, insbesondere inerte, Zusatzstoffe enthält. Außerdem enthält die Frischbetonmasse häufig mindestens ein Zusatzmittel, z.B. ein Fließmittel und/oder ein Dispergiermittel. Die gießfähige bzw. gießfertige Frischbetonmasse wird in eine Gießform gegossen, auftreiben und ansteifen gelassen, geschnitten und anschließend einer Dampfhärtung unterzogen. Im Gegensatz zu herkömmlichem, nicht autoklaviertem Beton weist Porenbetonmaterial keine groben Zuschlagkörner mit einer Korngröße > 2,0 mm auf.

Für die Herstellung von hydrothermal gehärteten Schaumbetonformkörpern wird der Frischbetonmasse anstelle des Treibmittels vorgefertigter Schaum untergemischt oder die einen Schaumbildner enthaltende Frischbetonmasse durch Rühren direkt aufgeschäumt und anschließend die gießfähige bzw. gießfertige Frischbetonmasse in die Gießform gegossen. Der Treibprozess entfällt jeweils.

Herkömmliche Poren- und Schaumbetonformkörper bestehen somit im Wesentlichen aus einem Feststoffsteggerüst, welches hauptsächlich aus Calciumsilikathydratphasen (CSH-Phasen) besteht. Hauptsächlich meint, dass das Feststoffsteggerüst bezogen auf seine Trockenmasse zu über 50 M.-% aus den CSH-Phasen besteht. Bei hohen Rohdichten, z.B. > 650 kg/m$^3$, kann der Gehalt auch unter 50 M.-% liegen. Das Feststoffsteggerüst kann zudem z.B. Restquarzkörner sowie gegebenenfalls die inerten Zusatzstoffen enthalten. Die Restquarzkörner und die inerten Zusatzstoffe sind in die CSH-Phasen eingebettet. Das Feststoffsteggerüst weist Stege auf, die die durch die Porosierung oder die Schaumzugabe oder das Aufschäumen künstlich erzeugten Poren (= Makroporen) umgeben. Außerdem weist das Feststoffsteggerüst Nano-, Gel- und Mikroporen auf, die in die CSH-Phasen eingebettet sind bzw. in diesen verteilt sind. Die Nano-, Gel- und Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin bis kristallin, in der Regel handelt es sich um CSH(I) und hauptsächlich um 11 Å-Tobermorit.

Poren- bzw. Schaumbetonsteine sind Bausteine aus Poren- und Schaumbetonmaterial. Die in der Regel unbewehrten Poren- bzw. Schaumbetonsteine werden hauptsächlich als Mauersteine eingesetzt. Sie werden in Abhängigkeit von den Fertigungstoleranzen auch als Poren- oder Schaumbetonplansteine- oder -blöcke bezeichnet.

Bewehrte Poren- bzw. Schaumbetonformkörper werden hauptsächlich als großformatige Poren- bzw. Schaumbetonbauteile eingesetzt.

**Poren-** bzw. Schaumbetonformkörper sehr geringer Rohdichte finden, wie bereits erläutert, als Poren- bzw. Schaumbetondämmkörper, bevorzugt in Form von Poren- bzw. Schaumbetondämmplatten, Verwendung.

Derzeit werden Porenbetonsteine genormter Güteklassen (EN 771-4 2015-11 und DIN 20000-404:2018-04) mit Rohdichten ≤ 800 kg/m$^3$ in der Regel mit sogenannten Kalk-Zementrezepturen hergestellt. Kalk-Zementrezepturen enthalten als CaO- und gleichzeitig SiO$_2$-Komponente Zement, in der Regel Portlandzement (CEM I). Die Kalk-Zementrezepturen können aber auch andere genormte (z.B. CEM II oder CEM III) oder nicht genormte Zemente enthalten. Zudem ist zusätzlich zum Zement als CaO-Komponente Branntkalk und/oder Kalkhydrat enthalten. Zusätzlich zum Zement ist in den Kalk-Zementrezepturen zudem eine weitere SiO$_2$-Komponente, z.B. gemahlener Quarz, vorzugsweise gemahlener Sand, oder Flugasche, enthalten. Des Weiteren enthalten Kalk-Zementrezepturen in der Regel einen Sulfatträger in Form von Anhydrit und/oder Gips. Der Sulfatträger im Zement wirkt als Erstarrungsregler und ist in dem Zement bereits enthalten. Für die genormten Zemente ist die Höhe des SO$_3$-Gehalts in der DIN EN 197-1:2011-11 festgelegt. Üblicherweise wird aber der Porenbetonmischung auch noch ein zusätzlicher Sulfatträger zugesetzt.

Der Erstarrungsregler im Zement dient dazu, die Abbindezeit im Beton einzustellen, dabei können in der Mischung weitere, die Abbindezeit beeinflussende Additive enthalten sein. Durch die Zugabe des Erstarrungsreglers im Zement wird erreicht, dass das Angebot an wasserlöslichem Sulfat bei Beginn der Hydratation gerade so hoch ist, dass der hydratisierende Tricalciumaluminatanteil ausschließlich als Trisulfat gebunden wird. Ohne den Sulfatträger im Zement dagegen würde eine frisch angemachte zementhaltige Mischung sofort erstarren, da aus dem Tricalciumaluminat unmittelbar große, blattförmige Tetracalciumaluminathydratkristalle entstehen würden, die im mit Anmachwasser gefüllten Raum zwischen den Zementpartikeln zu einem kartenhaus-ähnlichen Gefüge verwachsen. Dieses Phänomen ist unter dem Begriff "Löffelbinder" bekannt.

Bei der Herstellung von Poren- oder Schaumbetonformkörpern dient der zugesetzte Sulfatträger zudem dazu, die Bildung von Tobermorit aus Hydroxylellastadit zu fördern. Denn die sich im grünen Zustand des Porenbetonkuchens aus dem Zementklinker des Zements bildenden CSH-Phasen (hauptsächlich CSH-I und CSH-II) können durch den Sulfatträger in Hydroxylellestadit überführt werden, so dass sich aus diesem bei der weiteren Autoklavierung Tobermorit bilden kann (siehe Schober ZKG International H.7 2005 Vol. 58, S. 63ff.).

Auf dem Fachgebiet sind verschiedene Verfahren zur Herstellung von Poren- oder Schaumbetonformkörpern aus Kalk-Zementrezepturen und auch aus reinen Zementrezepturen bekannt:

Aus der WO 98/02391 A1 geht z.B. ein Verfahren zur Herstellung von Porenbeton hervor. Die dazu verwendete, schnell erstarrende Mischung weist eine $SiO_2$ -Komponente, Branntkalk, ein Treibmittel, Gips, Zement und Wasser auf. Um die Reaktivität des Branntkalks zu verringern, wird beispielsweise Ligninsulfonat zugegeben. Des Weiteren kann ein Polyacrylat (Dispex N 40 V von BASF) als Dispergiermittel verwendet werden.

Die CN 102 757 211 A offenbart z.B. ein Verfahren zur Herstellung eines Porenbetonsteins. Die dazu verwendete Mischung weist unter anderem 2 bis 4 M.-% Zementklinker und 1 bis 3 M.-% Gips auf.

Die EP 2 371 783 A1 betrifft einen Porenbetonformkörper sowie ein Verfahren zu dessen Herstellung. Die zur Herstellung verwendete zementhaltige Gießmasse weist ein Zusatzmittel zur Verhinderung der Sedimentation auf. Dabei handelt es sich um ein Polysaccharid und/oder Polyethylenglykol und/oder Polyethylenoxid und/oder ein Melaminharzderivat. Gemäß der EP 2 371 783 A1 können auch weitere beliebige Zusatzmittel zugegeben werden, z.B. Polyacrylsäure und ein Dispergiermittel.

Die CN 104 628 416 A offenbart ein Verfahren zur Herstellung von Porenbeton, welcher aus einer Mischung hergestellt ist, die 10 bis 15 M.-% Zementklinker und 3 bis 6 M.-% Calciumsulfat enthält.

Auch die CN 107 963 903 A offenbart ein Verfahren zur Herstellung eines Porenbetonsteins, wobei die Mischung zur Herstellung des Porenbetonsteins 6 bis 12 M.-% Zementklinker und 3 bis 6 % natürlichen Gips enthält.

Die CN 106 045 561 A offenbart ein Verfahren zur Herstellung eines Porenbetonsteins. Die zur Herstellung des Porenbetonsteins verwendete Mischung weist 2 M.-% Zementklinker und 3 M.-% Gips auf.

Aus der CN 102 757 211 A geht ebenfalls ein Verfahren zur Herstellung eines Porenbetonsteins hervor. Die zur Herstellung verwendete Mischung weist 2 bis 4 M.-% Zementklinker und 1 bis 3 M.-% Gips auf.

Die Kalk-Zementrezepturen haben jedoch bekanntermaßen Nachteile. Durch den Gipszusatz kann es zum Beispiel zu Kalkvergrießungen in der Frischbetonmasse kommen, deren negative Auswirkungen bekannt sind.

Der wesentlichste Nachteil von Poren- und Schaumbetonformsteinen auf Kalk-Zementrezepturbasis und Zementrezepturbasis aber ist, dass sie Sulfat aus dem Portlandzement und/oder dem Anhydrit-/Gipszusatz der Ausgangsmischung aufweisen. Das Sulfat ist auslaugbar. Dies erschwert das Recycling von Baustellenabfällen und Abbruchmaterial aus Porenbeton, weil der Sulfat-Grenzwert zum Einsatz im Landschaftsbau nicht eingehalten wird. Sulfationen können zudem unter bestimmten Bedingungen während der Bauwerkserstellung mit Calciumsilikathydratphasen des verwendeten mineralischen Mörtels reagieren und Ettringit (3 CaO x $Al_2O_3$ x 3 $CaSO_4$ x 32 $H_2O$) bzw. Thaumasit ($CaSiO_3$ x $CaSO_4$ x $CaCO_3$ x 15 $H_2O$) bilden. Diese Ettringit-/Thaumasitbildung zerstört durch eine mit Volumenvergrößerungen in der Mörtelfuge einhergehende Kristallisation den Baustoffverbund. Einzig wirksame Gegenmaßnahme ist die Verwendung von sulfatwiderstandsfähigen Mörteln.

Des Weiteren sind auch reine Kalkrezepturen zur Herstellung von Porenbetonformkörpern auf dem Fachgebiet bekannt. Die Kalkrezepturen weisen nur Branntkalk und/oder Kalkhydrat als CaO-Komponente, aber keinen Zement und keinen Zementklinker auf. Folglich weisen sie keinen Sulfatträger als Erstarrungsregler auf, so dass die oben genannten Probleme vermieden werden.

Die WO 2009/121635 A1 offenbart beispielsweise zwei Verfahren zur hydrothermalen Herstellung von Porenbeton- oder Schaumbetonformkörpern aus einer Kalkrezeptur. Es wurde dabei herausgefunden, dass es bei Kalkrezepturen nicht auf die angesteifte, schneidfähige Konsistenz des Kuchens ankommt, sondern auf den Wassergehalt des Porenbetonkuchens bevor er in den Autoklaven gefahren wird. Problematisch ist, dass das Wasser während der Autoklavierung nach unten sickert und sich dort sammelt. Dadurch wird der untere Bereich des Porenbetonkuchens instabil und der Porenbetonkuchen kann kollabieren. Die WO 2009/121635 A1 befasst sich deshalb mit Maßnahmen, um das Wasser im Porenbetonkuchen während des Autoklavierens zu immobilisieren.

Gemäß einem ersten Verfahren wird gemäß der WO 2009/121635 A1 deshalb der Porenbetonkuchen nach dem Ansteifen auf eine Seitenwand der Gießform gekippt und so geschnitten. Er steht beim Schneiden somit hochkant. Nach dem Schneiden wird der Kuchen wieder zurück auf seine Breitseite gekippt und auf einem Härterost autoklaviert. Durch das Zurückkippen und die relativ geringe Auflast, wenn der Porenbetonkuchen auf seiner Breitseite lagert, sickert weniger Wasser nach unten, so dass der Porenbetonkuchen in seinem unteren Bereich weniger aufgeweicht wird.

Gemäß einem zweiten Verfahren wird gemäß der WO 2009/121635 A1 hochdisperse Kieselsäure verwendet, welche das Wasser weitgehend immobilisiert. Dadurch kann der Porenbetonkuchen sogar hochkant autoklaviert werden.

Die CH 499 469 offenbart im Rahmen eines nicht erfindungsgemäßen Ausführungsbeispiels die Herstellung eines Gasbetonformkörpers aus einer Frischmasse, die bezogen auf die trockenen Bestandteile, 64 M.-% Sand, 21 M.-% Weißfeinkalk und 15 M.-% Kalkhydrat aufweist.

Auch die EP 3 235 794 A1 offenbart einen sulfatarmen Porenbeton sowie eine Mischung und ein Verfahren zu seiner Herstellung. Der Porenbeton besteht aus 25 bis 65 M.-% Quarzmehl, 5 bis 30 M.-% Porenbetonrückgut, 0 bis 40 M.-% Zement, 5 bis 25 M.-% Branntkalk, 0 bis 15 M.-% gemahlenem Porenbeton, 0,05 bis 0,4 M.-% Aluminiumkomponente, 0 bis 5 M.-% eines Sulfatträgers, wie beispielsweise Anhydrit oder Gips, 0 bis 15 M.-% kalziniertem Ton (CT) und/oder 0 bis 15 M.-% hochgebranntem Ton (AT) sowie Wasser. Dabei beträgt die Summe aus CT und AT wenigstens 1,5 M.-% und der Porenbeton weist ein Auslaugverhalten, welches eine Sulfatkonzentration von höchstens 500 mg/l Sulfat im Eluat, ergibt, auf. Zudem weist der Porenbeton ein hygrisches Gesamtschwinden von 0,4 mm/m oder weniger auf. Die angegebenen M.-% beziehen sich auf die Trockenmasse der Mischung. Ziel der EP 3 235 794 A1 ist es, den Zementanteil möglichst gering zu halten und ohne die bisher eingesetzten Sulfatträger auszukommen. Der Zement und die Sulfatträger werden gemäß der EP 3 235 794 A1 möglichst vollständig durch den kalzinierten Ton (CT) und/oder den amorphen Ton (AT) ersetzt.

Des Weiteren sind auf dem Gebiet der herkömmlichen Betontechnologie/Mörteltechnologie sulfatträgerfreie Rezepturen bekannt:
Die RU 2159754 C2 offenbart beispielsweise die Herstellung eines nicht autoklavierten Leichtbetons. Die Mischung zur Herstellung des Leichtbetons weist ohne Zusatz von Gips vermahlenen Zementklinker und einen Schaumbildner auf.

Die DE 10 2006 038743 A1 offenbart die Verwendung einer Feststoff-Zusammensetzung zur Herstellung eines Fliesenklebers. Dabei umfasst die Feststoff-Zusammensetzung ein sulfatträgerfreies Portlandzementklinkermehl, einen Mörtelverzögerer, einen Celluloseether sowie gegebenenfalls weitere Bestandteile zur Herstellung eines Fliesenklebers.

Die EP 1 072 566 A1 befasst sich mit einer schnell erhärtenden, hydraulischen Bindemittelmischung und einem Verfahren zu ihrer Herstellung. Die Bindemittelmischung wird zur Herstellung von Beton verwendet. Sie weist zudem eine sulfatträgerfreie, insbesondere ohne Sulfatträger vermahlene, hydraulische Bindemittelkomponente und eine Komponente zur Erhärtungsbeschleunigung auf. Zur Steuerung der Frühfestigkeit und der Frühfestigkeitsentwicklung weist sie sowohl Natriumcarbonat als auch Kaliumcarbonat in auf den jeweiligen Anwendungsfall abgestimmten Verhältnissen auf. Zudem ist eine die Erstarrung verzögernde Komponente in Form einer Sulfonsäuregruppe vorhanden. Bei der sulfatträgerfreien Bindemittelkomponente kann es sich um sulfatträgerfreies Portlandzementklinkermehl handeln.

Die DE 198 54 477 A1 offenbart eine schnell erstarrende hydraulische Bindemittelzusammensetzung, enthaltend eine sulfatträgerfreie Bindemittelkomponente und ein sulfonatgruppenfreies Fließmittel. Bei der sulfatträgerfreien Bindemittelkomponente kann es sich um ein Portlandzementklinkermehl handeln. Bei dem sulfonatgruppenfreien Fließmittel kann es sich um Polycarboxylat handeln, welches auch eine Dispergierwirkung hat. Die Bindemittelmischung der DE 198 54 477 A1 wird beispielsweise als Spritzbindemittel oder zur Herstellung von Spritzbetonen oder zur Herstellung von Mörteln verwendet.

Die DE 101 41 864 A1 offenbart eine Schnellzement-Bindemittelmischung für einen schnell erhärtenden Beton. Die Bindemittelmischung weist eine steuerbare Verarbeitungszeit und eine nach dem Ende der Verarbeitungszeit rasch ansteigende Festigkeit auf, wobei die Bindemittelmischung eine sulfatträgerfreie Bindemittelkomponente mit Portlandzementklinkerfeinstmehl sowie ein eine Strukturviskosität gewährleistendes Mittel aufweist. Bei dem die Strukturviskosität gewährleistenden Mittel handelt es sich beispielsweise um Gluconsäure und deren Salze. Um das zu schnelle Erstarren zu verhindern, enthält die Bindemittelmischung zudem Verzögerer.

Aus der DE 196 33 447 A1 geht eine schnell erhärtende hydraulische Bindemittelmischung aus gemahlenem Portlandzementklinker mit hohem Sulfatwiderstand hervor. Die Bindemittelmischung weist zudem einen anorganischen Abbindebeschleuniger und einen Erstarrungsverzögerer auf. Bei dem Erstarrungsverzögerer handelt es sich entweder um ein System aus einem festigkeitsfördernden, das Wachstum von Calciumaluminatcarbonathydraten hemmendes organisches Mittel und/oder ein zusätzliches funktionelles Mittel, wobei das Verhältnis der beiden Komponenten 1:0,83 bis 1:6 ist. Die Bindemittelmischung wird zur Herstellung von Spritzmörtel oder Spritzbeton verwendet.

Aufgabe der vorliegenden Erfindung ist die Bereitstellung eines Verfahrens zur Herstellung von sulfatarmen bis sulfatfreien, hydrothermal gehärteten Poren- und/oder Schaumbetonformkörpern, welches einfach und flexibel mittels herkömmlicher Verfahrensschritte prozessierbar ist und gute mechanische und hygrische Eigenschaften, insbesondere gute Festigkeitseigenschaften, der hergestellten Poren- und/oder Schaumbetonformkörper gewährleistet. Das Verfahren soll insbesondere die Nutzung vorhandener Maschinen und Anlagen ermöglichen.

Diese Aufgabe wird durch ein Verfahren mit den Merkmalen von Anspruch 1 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:

Figur 1:  Ermittelte A-Zahlen und amorpher Phasengehalt, aufgetragen über dem C/S-Verhältnis einer ersten Versuchsreihe

Figur 2:  Gemessene Ausbreitmaße einer vierten Versuchsreihe

Figur 3:     Ermittelte A-Zahlen der vierten Versuchsreihe

Im Rahmen der Erfindung wurde überraschenderweise herausgefunden, dass es möglich ist, Poren- und/oder Schaumbetonformkörper aus einer Frischbetonmasse herzustellen, die zwar Portlandzementklinkermehl aber keinen Sulfatträger als Erstarrungsregler enthält. Bei Portlandzementklinkermehl handelt es sich um reinen gemahlenen Portlandzementklinker ohne Zusatz bzw. ohne Zugabe, insbesondere ohne Zumahlung, von Sulfatträger, um sogenannten Löffelbinder. Die Frischbetonmasse enthält somit erfindungsgemäß keinen sulfatträgerhaltigen Zement, sondern lediglich sulfatträgerfreies Portlandzementklinkermehl. Trotzdem erstarrt die Frischbetonmasse nicht sofort und ist überraschenderweise prozessierbar.

Die Frischbetonmasse enthält zudem erfindungsgemäß vorzugsweise keinen aus Magnesiumcarbonat bestehenden Zusatzstoff. Geringfügige Nebenbestandteile bzw. Verunreinigungen an Magnesiumcarbonat können selbstverständlich in den Bestandteilen der Frischmasse enthalten sein.

Sulfatträgerfrei bedeutet dabei im Rahmen der Erfindung, dass weder der Frischbetonmasse noch einer der einzelnen Komponenten/Rohstoffe der Frischbetonmasse ein Sulfatträger zugegeben wird.

Als Sulfatträger wird im Rahmen der Erfindung ein Rohstoff verstanden, welcher aus Alkalisulfat oder Erdalkalisulfat, vorzugsweise aus Calciumsulfat, besteht. Beispielsweise handelt es sich um Gips oder Anhydrit. Selbstverständlich können diese Rohstoffe Nebenbestandteile bzw. Verunreinigungen enthalten. Nebenbestandteile sind unerwünscht und deshalb als Verunreinigungen zu interpretieren.

Im Gegensatz dazu werden Rohstoffe, welche Sulfatminerale bzw. Sulfatverbindungen lediglich als Nebenbestanteile enthalten, nicht als Sulfatträger im Rahmen der Erfindung bezeichnet.

Ein Beispiel für einen derartigen Rohstoff ist sulfathaltiges Porenbetonmehl. Denn Porenbetonmehl enthält, falls es aus einer herkömmlichen Kalk-Zementrezeptur oder einer Zementrezeptur hergestellt wurde, zwar einen gewissen Anteil an Calciumsulfat. Allerdings besteht das Porenbetonmehl nicht daraus, sondern enthält das Alkali- und/oder Erdalkalisulfat lediglich als Nebenbestandteil bzw. Verunreinigung.

Auch Portlandzementklinkermehl kann Sulfatminerale bzw. Sulfatverbindungen als Nebenbestandteile enthalten. Diese resultieren z.B. aus den natürlichen Rohmaterialien und/oder aus bei der Klinkerherstellung verwendeten Brennstoffen.

Der Anteil an $SO_3$ im Portlandzementklinkermehl ist aber vorzugsweise < 2,0 M.-%, bevorzugt < 1,5 M.-%, bestimmt mittels Infrarotspektrometrie unter Nutzung eines Eltra CS-2000 von der Eltra GmbH.

Auch wenn die Frischbetonmasse somit erfindungsgemäß keinen zugesetzten Sulfatträger enthält, kann die Frischbetonmasse dennoch geringe Mengen an Sulfat enthalten, welches als Verunreinigung in den verwendeten Rohstoffen enthalten ist. Die Verunreinigungen haben z.B. geogenen oder technologischen Hintergrund (technologische Verunreinigungen).

Wie bereits erläutert kann z.B. recycliertes Porenbetonmehl, das aus der Verwertung von Porenbetonrestmassen stammt, z.B. bis zu 8 M.-% Calciumsulfat enthalten. Infolgedessen können auch die erfindungsgemäß hergestellten Poren- oder Schaumbetonformkörper geringe Mengen an Sulfat enthalten. Aufgrund des fehlenden Zusatzes eines Sulfatträgers weisen die erfindungsgemäß hergestellten Poren- oder Schaumbetonformkörper aber eine reduzierte und vorzugsweise sehr geringe Sulfatkonzentration auf. Insbesondere weisen sie eine Sulfatkonzentration $\leq$ 100 mg/l, bevorzugt $\leq$ 50 mg/l, Sulfat im Eluat gemäß DIN EN 12457-4: 2003-01 (DEV S 4) auf.

Überraschend war vor allem, dass die Herstellung des Poren- oder Schaumbetonformkörpers auf übliche Art und Weise mit den bekannten Vorrichtungen erfolgen kann. Insbesondere tritt wider Erwarten kein zu schnelles Erstarren (Löffelbinder) auf. Die Mischung ist ohne weiteres prozessierbar und auch der Treibprozess wird nicht negativ beeinflusst. Dies, obwohl das Ausbreitmaß erwartungsgemäß deutlich geringer ist als bei herkömmlichen, sulfatträgerhaltigen Rezepturen. Eigentlich wäre deshalb zu erwarten gewesen, dass der Treibprozess behindert wird. Offenbar sorgt aber unter anderem der im Vergleich zur Herstellung von herkömmlichem, nicht autoklaviertem Beton bzw. Mörtel deutlich höhere Wassergehalt der Gießmasse bzw. Frischbetonmasse dafür, dass die Frischbetonmasse prozessierbar bleibt.

Der W/F-Wert (Wasser/Feststoffwert) der Frischbetonmasse beträgt dabei vorzugsweise 0,45 bis 1,5, bevorzugt 0,55 bis 1,0, besonders bevorzugt 0,60 bis 1,0.

Zudem weist die Frischbetonmasse vorzugsweise ein Ausbreitmaß von 20 bis 45 cm, bevorzugt 25 bis 40 cm, auf. Das Ausbreitmaß wurde branchenüblich gemessen. Ein Metallring mit 69 mm Innendurchmesser und 59 mm Höhe wird hierzu mittig auf eine Glasplatte aufgesetzt und bis zum Rand mit Porenbetonfrischmasse gefüllt. Sofort im Anschluss wird der Ring schnell waagerecht angehoben und die Porenbetonfrischmasse breitet sich fast kreisrund aus. Der Durchmesser des Kreises wird zweimal senkrecht zueinander gemessen und der Mittelwert auf 0,5 cm genau angegeben. Weil sich die Fließfähigkeit der frischen Porenbetonmasse durch die einsetzende Wasserstoffentwicklung sehr schnell verringert, ist es erforderlich, dass die Bestimmung des Ausbreitmaßes innerhalb von 60 Sekunden nach dem Abguss abgeschlossen ist.

Bei der Herstellung von Schaumbetonformkörpern wird das Ausbreitmaß vor dem Aufschäumen der den Schaumbildner enthaltenden Frischbetonmasse gemessen.

Vorzugsweise weist die Frischbetonmasse außerdem einen Gehalt an Portlandzementklinkermehl von 5 bis 45 M.-%, bevorzugt 10 bis 35 M.-%, besonders bevorzugt 10 bis 25 M.-%, bezogen auf den gesamten Feststoffanteil (=Summe Feststoffe) der Frischbetonmasse auf. Unter dem Feststoffanteil versteht man dabei die Summe aller Feststoffe also die Masse der frisch dosierten Trockenstoffe sowie der im Rückschlamm enthaltenen Trockenstoffe. Die in Zusatzmitteln bzw. Additiven, wie z.B. Fließ- oder Dispergiermitteln, und im Treibmittel bzw. Schaumbildner enthaltenen Feststoffe gehen nicht in die Summe der Feststoffe ein, ihr Gehalt wird auf den Feststoffanteil bezogen.

Bei den im Rückschlamm enthaltenen Trockenstoffen handelt es sich um aus den Bindemittelkomponenten gebildete Hydratphasen und gegebenenfalls inerte Stoffe, wie Porenbetonmehl oder Gesteinsmehl. Die Hydratphasen sind bereits derart ausreagiert, dass sie nicht mehr zur Grünstandsfestigkeit beitragen. Sie reagieren erst bei der hydrothermalen Härtung im Autoklaven.

Vorzugsweise enthält die Frischbetonmasse 2 bis 35 M.-%, bevorzugt 2 bis 25 M.-%, besonders bevorzugt 2 bis 20 M.-%, ganz besonders bevorzugt 2 bis 17 M.-% und noch bevorzugter 10 bis 15 M.-%, Rückschlamm (Trockenmasse) bezogen auf den Feststoffanteil in der Frischbetonmasse.

Der Rückschlamm stabilisiert die Frischbetonmasse und den grünen Poren- oder Schaumbetonformkörper. Die im Rückschlamm enthaltenen C-S-H-Phasen wirken dabei als Kristallisationskeime für die sich aus den Bindemittelkomponenten und insbesondere dem Portlandzementklinkermehl neu bildenden C-S-H-Phasen, die die Grünfestigkeit der frischen Poren- oder Schaumbetonformkörper bedingen. Hieraus resultiert der Nebeneffekt, dass, weil der Rückschlamm bereits abreagiert ist, keine zusätzliche exotherme Energie durch Phasenneubildung im System freisetzt wird.

Portlandzementklinkermehl liefert für die Reaktion im Autoklaven CaO und $SiO_2$. Es ist damit zugleich CaO- als auch $SiO_2$-Komponente.

Als weitere $SiO_2$-Komponente weist die Frischbetonmasse zudem gemahlenen Quarz, bevorzugt gemahlenen Quarzsand, auf.

Der Quarz, bevorzugt der Quarzsand, macht vorzugsweise mengenmäßig den überwiegenden Anteil an $SiO_2$ in der Frischbetonmasse aus.

Vorzugsweise enthält die Frischbetonmasse 25 bis 80 M.-%, bevorzugt 30 bis 70 M.-%, besonders bevorzugt 30 bis 45 M.-%, gemahlenen Quarz, bezogen auf den Feststoffanteil in der Frischbetonmasse. So kann insbesondere die Bildung einer ausreichenden Menge an CSH-Phasen gewährleistet werden.

Flugasche als $SiO_2$-Komponente ist vorzugsweise nicht enthalten, da sie in der Regel Sulfat als Nebenbestandteil aufweist.

Zudem weist die Frischbetonmasse als weitere CaO-Komponente Branntkalk und/oder Kalkhydrat auf.

Vorzugsweise enthält die Frischbetonmasse 5 bis 25 M.-%, bevorzugt 10 bis 25 M.-%, besonders bevorzugt 15 bis 25 M.-%, Branntkalk bezogen auf den Feststoffanteil in der Frischbetonmasse. So kann insbesondere die Bildung einer ausreichenden Menge an CSH-Phasen gewährleistet werden.

Die Frischbetonmasse kann zudem weitere auf dem Fachgebiet bekannte inerte Zusatzstoffe, vorzugsweise natürliches gemahlenes Kalksteinmehl und/oder gefälltes Calciumcarbonat (PCC) und/oder Porenbetonmehl aufweisen. Bei Porenbetonmehl handelt es sich um recycliertes, gemahlenes, hydrothermal gehärtetes Porenbetonmaterial. Dieses kann als sortenrein aufbereiteter Bauschutt oder direkt im Anschluss an die Produktion anfallen. Es ist vorzugsweise erfindungsgemäß hergestellt. Zudem weist es üblicherweise eine Korngröße $\leq 1700\ \mu m$ auf. Porenbetonmehl wird auf dem Fachgebiet auch als Porenbetonsplitt oder Porenbetonfeinmaterial oder Unterkorn bezeichnet.

Vorzugsweise enthält die Frischbetonmasse 0 bis 60 M.-%, bevorzugt 1 bis 30 M.-%, besonders bevorzugt 1 bis 12 M.-% Porenbetonmehl bezogen auf den Feststoffanteil in der Frischbetonmasse.

Vorzugsweise enthält die Frischbetonmasse zudem 0 bis 20 M.-%, bevorzugt 0 bis 17 M.-% Gesteinsmehl, , bezogen auf den Feststoffanteil in der Frischbetonmasse. Dabei handelt es sich bei dem Gesteinsmehl vorzugsweise um Kalksteinmehl.

Die Frischbetonmasse kann zudem zumindest ein auf dem Fachgebiet bekanntes Zusatzmittel, vorzugsweise ein Fließmittel und/oder ein Dispergiermittel und/oder einen Sedimentationshemmer aufweisen. Bei dem Fließmittel handelt es sich z. B. um Polycarboxylatether (PCE). Bei dem Dispergiermittel handelt es sich z.B. um Polyacrylat (PAR) oder ein Acrylpolymer.

Vorteilhafte Zusammensetzungen bzw. Rezepturen der Frischbetonmasse sind in nachstehender Tabelle angeben (Angaben in M.-%, bezogen auf die gesamte Trockenmasse (=Summe der Feststoffe) der Frischbetonmasse; Zusatzmittel und die Schaumkomponente werden dabei wie vorliegend bzw. auf dem Markt erhältlich betrachtet [nicht deren Wirkstoffgehalt] und additiv auf die Trockenmasse bezogen):

| **Feststoffe der Trockenmasse:** | | **vorzugsweise** |
|---|---|---|
| | [M.-%] | [M.-%] |
| **Portlandzementklinkermehl** | 5 bis 45 | 10 bis 35 |

(fortgesetzt)

| Feststoffe der Trockenmasse: | | vorzugsweise |
|---|---|---|
| | [M.-%] | [M.-%] |
| **Branntkalk** | 0 bis 30 | 15 bis 25 |
| **Kalkhydrat** | 0 bis 20 | 0 bis 10 |
| **Gemahlener Quarz, vorzugsweise Sand** | 25 bis 80 | 30 bis 70 |
| **Gesteinsmehl, z.B. Kalksteinmehl** | 0 bis 20 | 0 bis 17 |
| **Porenbetonmehl** | 0 bis 60 | 1 bis 30 |
| **Rückschlamm (trocken)** | 0 bis 25 | 2 bis 17 |
| **Additiv zu den Feststoffen:** | | |
| **Aluminiumkomponente (Wirkstoffgehalt)** | 0 bis 0,8 | 0,03 bis 0,8 |
| **Schaumkomponente, vorzugsweise einer Rohdichte von 40 bis 50 kg/m³** | 0 bis 45 | 20 bis 42 |
| **Schaumbildner (Wirkstoffgehalt)** | 0 bis 3 | 0,2 bis 1,5 |
| **Zusatzmittel (jeweils), z.B. Dispergiermittel, Fließmittel** | 0 bis 3 | 0 bis 1 |

Die in der obigen Tabelle angegebenen Feststoffanteile müssen sich nicht auf 100 M.-% ergänzen. Es können vielmehr auch noch weitere Komponenten enthalten sein. Infolgedessen gilt jede Komponente und jeder in der Tabelle offenbarte Bereich als für sich genommen vorteilhaft. Zudem können die jeweils angegebenen Unter- und Obergrenzen der für die einzelnen Komponenten angegebenen Bereiche miteinander kombiniert werden.

Bei der Aluminiumkomponente kann es sich in an sich bekannter Weise um Aluminiumpulver, -paste oder -suspension handeln. Bei dem in der Tabelle angegebenen Anteil handelt es sich um den Feststoff- bzw. Wirkstoffgehalt der jeweiligen Aluminiumkomponente.

Zudem ist immer eine Aluminiumkomponente oder alternativ eine Schaumkomponente oder ein Schaumbildner vorhanden. Aluminiumkomponente, Schaumkomponente bzw. Schaumbildner werden somit alternativ eingesetzt.

Des Weiteren ist es bevorzugt, wenn die Frischbetonmasse Zementklinker und gleichzeitig Branntkalk und/oder Kalkhydrat aufweist.

Der Rückschlamm ist zudem vorzugsweise sortenrein. Es handelt sich also um Rückschlamm aus erfindungsgemäßem Material.

Wie bereits erläutert, erfolgt die Herstellung der Poren- oder Schaumbetonformkörper erfindungsgemäß auf übliche Art und Weise:

Grundsätzlich wird zunächst die Frischbetonmasse hergestellt, die Portlandzementklinkermehl, als zumindest eine weitere, also von dem Portlandzementklinkermehl verschiedene, hydrothermal reagierende CaO-Komponente Branntkalk und/oder Kalkhydrat, als mindestens eine weitere, also von dem Portlandzementklinkermehl verschiedene, hydrothermal reagierende $SiO_2$-Komponente gemahlenen Quarz, vorzugsweise Rückschlamm, mindestens ein Treibmittel oder Schaumbildner und Wasser enthält. Erfindungsgemäß ist die Frischbetonmasse dabei sulfatträgerfrei. Das heißt, sie weist keinen zugesetzten Sulfatträger auf. Denn erfindungsgemäß wird lediglich gemahlener Portlandzementklinker als Rohstoff verwendet, welcher im Gegensatz zu Portlandzement keinen zugesetzten Sulfatträger aufweist.

Die Frischbetonmasse wird in eine Gießform gefüllt. Wenn bewehrte Porenbetonformkörper hergestellt werden sollen, kann in die Gießform eine Bewehrung eingehängt sein. Alternativ dazu kann die Bewehrung auch erst nach dem Befüllen der Gießform mit der Frischbetonmasse in die Gießform eingehängt werden.

Im Fall der Herstellung von Porenbetonformkörpern wird die Gießmasse auftreiben gelassen.

Bei der Herstellung von Schaumbetonformkörpern entfällt das Auftreiben. Für die Herstellung von Schaumbetonformkörpern wird dabei entweder die einen Schaumbildner enthaltende Frischmasse zur Ausbildung des Schaums aufgeschlagen oder der vorgefertigte Schaum wird untergemischt. Dies erfolgt vorzugsweise vor dem Einfüllen der Frischmasse in die Gießform.

Danach wird die Gießmasse zu einem grünen Poren- oder Schaumbetonkuchen ansteifen gelassen.

Nach dem Ansteifen erfolgt in an sich bekannter Weise das Schneiden des Poren- oder Schaumbetonkuchens in einzelne Poren- oder Schaumbetonformkörper.

Die geschnittenen Poren- oder Schaumbetonformkörper werden dann im Autoklaven in an sich bekannter Weise unter Sattdampfbedingungen hydrothermal gehärtet.

Beispielsweise wird dabei mit einer Haltephase von 6 bis 12 h bei einer Temperatur von 180 bis 190 °C autoklaviert. Die Anfahr- und die Abfahrphase sind zudem vorzugsweise linear, ohne Zwischenhaltephasen. Zudem dauern die Anfahr- und die Abfahrphase jeweils z.B. 1,5 bis 6 h. In einer sehr bevorzugten Autoklavfahrweise beginnt die Autoklavierung mit einer Vakuumphase. Hierbei wird nach dem Verschließen des Autoklaven die Luft aus demselben abgepumpt, bis ein Unterdruck von z.B. 0,4 bar erreicht ist. Dieser Vorgang dauert z.B. 20 - 30 Minuten. Anschließend wird Dampf in den Autoklaven geleitet und die Hochfahrphase beginnt. In einer anderen bevorzugten Fahrweise wird die im Autoklaven vorhandene Luft durch druckloses Spülen mit Dampf reduziert. Dieser Vorgang dauert z.B. 20 - 30 Minuten.

Wie bereits erläutert, wurde im Rahmen der Erfindung herausgefunden, dass der grüne Poren- oder Schaumbetonkuchen auf herkömmliche Art und Weise prozessierbar ist, also mittels der auf dem Fachgebiet bekannten unterschiedlichen Schneidverfahren geschnitten werden kann. Das Schneiden kann z.B. wie folgt erfolgen:
Sobald der Poren- oder Schaumbetonkuchen seine Grünfestigkeit erreicht hat, wird die gesamte Gießform auf eine Formlängswand, den so genannten Härteboden gekippt. Anschließend werden die anderen Formwände zusammen mit dem Formboden abgenommen. Der so auf einer seiner Längsseiten stehende Poren- oder Schaumbetonkuchen wird zum Längsschneiden z.B. mit seiner Stirnseite voraus in Längsrichtung, also eine horizontale Richtung, durch einen Schneidrahmen mit sich horizontal und senkrecht zur Längsrichtung erstreckenden Schneiddrähten durchgeführt. Alternativ oder zusätzlich können auch die Schneiddrähte durch den Poren- oder Schaumbetonkuchen durchgeführt werden.

Zum Querschneiden wird z.B. der gesamte Poren- oder Schaumbetonkuchen in vertikaler Richtung nach oben durch einen Schneidrahmen mit sich horizontal und ebenfalls senkrecht zur Längsrichtung erstreckenden, ggf. oszillierenden Schneiddrähten durchgedrückt und anschließend wieder abgesenkt. Alternativ dazu wird der Schneidrahmen abgesenkt und wieder nach oben geführt. Zum Schneiden in vertikaler Richtung parallel zu den Querseiten wird der Poren- oder Schaumbetonkuchen z.B. in Längsrichtung durch sich vertikal erstreckende Messerleisten durchgeführt bzw. werden diese durch den Poren- oder Schaumbetonkuchen durchgezogen. Der geschnittene Poren- oder Schaumbetonkuchen wird anschließend auf dem Härteboden stehend dampfgehärtet.

Das Längs- und Querschneiden kann selbstverständlich auch in umgekehrter Reihenfolge erfolgen.

Alternativ dazu kann der Poren- oder Schaumbetonkuchen auch nach dem Schneidvorgang auf einen Träger, vorzugsweise einen Härterost, in seine ursprüngliche, liegende Position zurück- oder durchgekippt werden. Der geschnittene Poren- oder Schaumbetonkuchen ruht dann auf dem Träger, vorzugsweise dem Härterost, und wird vorzugsweise auf diesem gehärtet. Vor dem Zurückkippen wird vorzugsweise auch die sogenannte Bodenschicht entfernt, mit der der Poren- oder Schaumbetonkuchen zuvor auf der Seitenwand geruht hat.

Wird der Poren- oder Schaumbetonkuchen in seiner liegenden Position gehärtet, so bringt das manche Vorteile. Insbesondere kann, wie erläutert, die sogenannte Bodenschicht entfernt werden und es kommt nicht zu vertikalen Verklebungen der Steine. Damit kann der Prozessschritt des Trennens entfallen, der nach einer stehenden Härtung in der Regel notwendig ist.

Der Poren- oder Schaumbetonkuchen kann aber auch nach Entfernen der Bodenschicht aus seiner liegenden Position in seine vertikale, stehende Position zurückgekippt werden. Vorzugsweise wird er auf die Seitenwand zurück gekippt und auf dieser gehärtet.

Weiterhin kann der Poren- oder Schaumbetonkuchen durch ein anderes bekanntes Schneidverfahren geschnitten werden. In diesem Fall wird der Poren- oder Schaumbetonkuchen zunächst umgesetzt. Dafür werden die Seitenwände der Gießform nach dem Ansteifen des Poren- oder Schaumbetonkuchens weggeklappt, so dass der Poren- oder Schaumbetonkuchen plan auf der Formunterseite bzw. dem Formboden der Gießform ruht und seitlich nicht mehr gestützt wird. Anschließend wird der Poren- oder Schaumbetonkuchen über seine Längsseiten mit einem Greifer gefasst, angehoben, versetzt und auf einem Sägetisch oder Härterost oder einer anderen Schneidunterlage abgelegt.

Der Härterost weist Querträger auf, wobei auf den Querträgern vertikal nach oben abstehende Stifte vorgesehen sind und zwischen den Stiften lose Längsstäbe angeordnet sind, auf denen der Poren- oder Schaumbetonkuchen mit seiner Unterseite aufliegt. Über dem Härterost werden vorher horizontale, sich in eine Querrichtung des Poren- oder Schaumbetonkuchens erstreckende Schneiddrähte gespannt. Die Schneiddrähte werden anschließend von unten nach oben durch den Poren- oder Schaumbetonkuchen durchgezogen. Danach werden die entstandenen Schneidspalte vorzugsweise geschlossen, indem die einzelnen erzeugten Poren- oder Schaumbetonformkörper mittels Stoßen zusammen geschoben werden. Dies ist notwendig, um zu verhindern, dass beim anschließenden Längsschneiden aufgrund der Spalten keine Ecken ausreißen.

Anschließend wird der Poren- oder Schaumbetonkuchen längsgeschnitten. Dazu wird er durch eine Schneidvorrichtung durchgefahren, die einen Schneidrahmen mit darin eingespannten, sich vertikal erstreckenden Schneiddrähten aufweist. Die Schneiddrähte sind vorzugsweise zur Erzeugung einer glatten Schnittfläche in ihre Längsrichtung oszillierend antreibbar. Der Poren- oder Schaumbetonkuchen wird der Schneidvorrichtung auf dem Härterost zugeführt. Zum Schneiden wird der Härterost abgesenkt und der Poren- oder Schaumbetonkuchen nur noch auf den Längsstäben aufliegend durch die Schneidvorrichtung durchgefahren, wobei die Schneiddrähte durch die Zwischenräume zwischen den Längsstäben durchgeführt werden. Nach dem Schneiden wird der geschnittene Poren- oder Schaumbetonkuchen mit den Längsstäben wieder auf einem Härterost positioniert und mit diesem und den Längsstäben liegend im Autoklaven dampfgehärtet.

Entsprechend einem anderen bevorzugten Verfahren wird der schneidreife Poren- oder Schaumbetonkuchen auf einen Schneidtisch umgesetzt, auf dem bereits die Schneiddrähte für das Querschneiden aufliegen. Diese werden dann in an sich bekannter Weise oszillierend bewegt und nach oben durch den Poren- oder Schaumbetonkuchen gezogen, wobei dieser quer geschnitten wird. Anschließend können die einzelnen erzeugten Poren- oder Schaumbetonformkörper mittels eines Stoßers zusammengeschoben werden, wobei die entstandenen Schneidspalte geschlossen werden. Danach fährt ein zweiter Schneidrahmen, diesmal mit vertikal gespannten Schneiddrähten längs durch den Poren- oder Schaumbetonkuchen. Die Schneiddrähte sind dabei unten in verfahrbaren Stangen befestigt und oben an einem beweglichen Rahmen befestigt. Die verfahrbaren Stangen wiederum sind in Längsnuten des Schneidtisches angeordnet und in diesen verfahrbar. Der Poren- oder Schaumbetonkuchen wird somit längs geschnitten. Dabei kann der Schneidrahmen auch einen horizontal gespannten Schneiddraht oder eine Schneidleiste aufweisen, welche zum Abtrennen der oberen, gewölbten Gießkappe des Poren- oder Schaumbetonkuchens dient. Zuletzt wird ein Transportrost von unten aus dem Tisch gefahren, der Poren- oder Schaumbetonkuchen aufgenommen und abtransportiert.

Gemäß einem weiteren Verfahren, wird der Poren- oder Schaumbetonkuchen mit den Längsstäben oder direkt auf sich horizontal und quer zu den Längsstäben erstreckende Querleisten aufgelegt. Die Querleisten sind vertikal einzeln auf und ab bewegbar. Zunächst wird in bekannter Art und Weise wie oben beschrieben quer geschnitten. Zum Längsschneiden wird ein vertikaler Schneidrahmen mit sich vertikal und/oder horizontal erstreckenden Schneiddrähten in Längsrichtung durch den liegenden Poren- oder Schaumbetonkuchen durchgefahren. Dabei werden die Querleisten nacheinander einzeln abgesenkt, damit der Schneidrahmen zwischen den Stabunterseiten bzw. der Kuchenunterseite und den Querleisten hindurchgeführt werden kann.

Selbstverständlich kann das Schneiden auch gemäß der WO 2009/121635 A1 erfolgen. Zudem kann es auch gemäß der EP 2 189 262 A1 erfolgen.

Aus den oben beschriebenen Verfahren ergibt sich, dass der erfindungsgemäß hergestellte, angesteifte, grüne Poren- oder Schaumbetonkuchen eine ausreichende Festigkeit besitzt, um von der Formunterseite der Gießform abgehoben, horizontal verfahren und anschließend wieder abgesetzt zu werden. Dabei kann das Abheben und Umsetzen auf unterschiedliche Art und Weise erfolgen.

Wie oben bereits beschrieben können z.B. die Seitenwände der Gießform weggeklappt werden, so dass der Poren- oder Schaumbetonkuchen frei auf der Formunterseite der Gießform steht und anschließend über seine Längsseiten, mit einem Greifer gegriffen, angehoben und versetzt wird.

Alternativ dazu können die Seitenwände der Gießform vom Formboden und untereinander gelöst werden, so dass der Poren- oder Schaumbetonkuchen auf dem Formboden der Gießform steht und anschließend unter Nutzung der langen Seitenwände der Gießform als eine Art Haltebacken über seine Längsseiten mit einem Greifer gegriffen, angehoben und versetzt wird.

Oder es können die miteinander verbundenen Seitenwände der Gießform vom Formboden gelöst werden, so dass ein nach unten und oben offener Kasten gebildet wird. Anschließend wird der grüne Poren- oder Schaumbetonkuchen, durch Greifen der miteinander verbundenen Seitenwände der Gießform und mit einem Vakuumsauger, der auf die Oberseite des Kastens aufgesetzt wird und den Poren- oder Schaumbetonkuchen ansaugt, angehoben und versetzt.

Die Bearbeitung des Poren- oder Schaumbetonkuchens während des Umsetzens, z.B. das Profilieren der Steine oder Elemente mit Nuten, ist dabei in an sich bekannter Weise ebenfalls möglich.

Nach dem Schneiden kann der Poren- oder Schaumbetonkuchen jeweils liegend dampfgehärtet werden. Alternativ ist es möglich, den geschnittenen Poren- oder Schaumbetonkuchen, z.B. unter Verwendung eines Kipptisches, aufzustellen und in stehender Position zu härten.

Wie bereits erläutert, wurde erfindungsgemäß nicht nur festgestellt, dass die Frischbetonmasse und der Poren- oder Schaumbetonkuchen ohne weiteres prozessierbar sind, sondern es war auch überraschend, dass die erfindungsgemäß hergestellten Poren- und/oder Schaumbetonformsteine trotz des fehlenden Sulfatträgers dennoch einen ausreichend hohen Tobermoritgehalt und dadurch gute Festigkeitseigenschaften aufweisen. Somit ist die Menge und Ausbildung der CSH-Phasen überraschenderweise auch ohne Sulfatträger steuerbar.

Vorzugsweise weisen die erfindungsgemäß hergestellten Poren- oder Schaumbetonformkörper dabei einen Gehalt an 11Å Tobermorit, bezogen auf die Trockenmasse des Poren- oder Schaumbetonformkörpers, von 25 bis 60 M.-%, bevorzugt 30 bis 55 M.-%, bestimmt mittels Röntgendiffraktometrie, auf. Die Bestimmung des Gehalts an 11Å Tobermorit erfolgt wie im Rahmen der Ausführungsbeispiele detailliert dargelegt.

Der Ersatz des in der Porenbetonherstellung üblicherweise verwendeten Portlandzementes durch reines Portlandzementklinkermehl hat vor allem den Vorteil, dass - im Gegensatz zur Herstellung mit einer reinen Kalkrezeptur - die Grünstandsfestigkeit des Poren- oder Schaumbetonkuchens gleich bleibt und der Poren- oder Schaumbetonkuchen auf den vorhandenen Anlagen prozessiert werden kann. Auch die Härtung im Autoklaven bereitet keine Probleme.

Vorzugsweise weisen die erfindungsgemäß hergestellten Poren- oder Schaumbetonformkörper eine Druckfestigkeit von 0,1 bis 10 N/mm$^2$, bevorzugt von 0,15 bis 6 N/mm$^2$, auf. Die Druckfestigkeit wird bei Poren- oder Schaumbetonformkörpern mit einer Trockenrohdichte $\rho_0$ bis 150 kg/m$^3$ gemäß DIN EN 826:2013 nach Trocknung bei 40°C auf Massekonstanz und bei Poren- oder Schaumbetonformkörpern mit einer Trockenrohdichte $\rho_0$ > 150 kg/m$^3$ am

Würfel der Kantenlänge 100 mm gemäß DIN EN 772-1: 2011-07 geprüft.

Handelt es sich bei den erfindungsgemäß hergestellten Poren- oder Schaumbetonformkörpern um, vorzugsweise unbewehrte, Poren- oder Schaumbetonformsteine, weisen diese vorzugsweise eine Druckfestigkeit von 1,5 bis 10 $N/mm^2$, bevorzugt von 1,5 bis 6 $N/mm^2$, geprüft am Würfel der Kantenlänge 100 mm gemäß DIN EN 772-1: 2011-07 auf.

Handelt es sich bei den erfindungsgemäß hergestellten Poren- oder Schaumbetonformkörpern um bewehrte Poren- oder Schaumbetonformbauteile, weisen diese vorzugsweise eine Druckfestigkeit von 1,5 bis 10 $N/mm^2$, bevorzugt von 1,5 bis 6 $N/mm^2$, gemäß DIN EN 679:2005-09 auf.

Handelt es sich bei den erfindungsgemäß hergestellten Poren- oder Schaumbetonformkörpern um Poren- oder Schaumbetondämmkörper, insbesondere um Poren- oder Schaumbetondämmplatten, weisen diese vorzugsweise eine Druckfestigkeit von 0,1 bis 0,6 $N/mm^2$, bevorzugt von 0,15 bis 0,4 $N/mm^2$, gemäß DIN EN 826:2013 nach Trocknung bei 40°C auf Massekonstanz auf.

Außerdem weisen die erfindungsgemäß hergestellten Poren- oder Schaumbetonformkörper vorzugsweise eine Trockenrohdichte $\rho_0$ von 70 bis 800 $kg/m^3$, bevorzugt von 85 bis 600 $kg/m^3$, gemäß DIN EN 772-13: 2000-09 bzw. DIN EN 1602: 2013-05 auf.

Handelt es sich bei den erfindungsgemäß hergestellten Poren- oder Schaumbetonformkörpern um, vorzugsweise unbewehrte, Poren- oder Schaumbetonformsteine, weisen diese vorzugsweise eine Trockenrohdichte $\rho_0$ von 220 bis 800 $kg/m^3$, bevorzugt von 255 bis 600 $kg/m^3$, gemäß DIN EN 772-13: 2000-09 auf.

Handelt es sich bei den erfindungsgemäß hergestellten Poren- oder Schaumbetonformkörpern um bewehrte Poren- oder Schaumbetonformbauteile, weisen diese vorzugsweise eine Trockenrohdichte $\rho_0$ von 220 bis 800 $kg/m^3$, bevorzugt von 255 bis 600 $kg/m^3$, gemäß EN 678:1993 auf.

Handelt es sich bei den erfindungsgemäß hergestellten Poren- oder Schaumbetonformkörpern um Poren- oder Schaumbetondämmkörper, insbesondere um Poren- oder Schaumbetondämmplatten, weisen diese vorzugsweise eine Trockenrohdichte $\rho_0$ von 70 bis 150 $kg/m^3$, bevorzugt von 85 bis 115 $kg/m^3$, gemäß DIN EN 1602: 2013-05 auf.

Vorzugsweise weisen die erfindungsgemäß hergestellten Poren- oder Schaumbetonformkörper eine A-Zahl

zwischen 300 und 2600 [-], oder

zwischen 1000 und 2600 [-], oder

**zwischen** 1000 und 2200 [-], oder

zwischen 1000 und 2000 [-], oder

zwischen 600 und 2000 [-], oder

ganz besonders bevorzugt zwischen 1000 und 1800 [-],

auf. Alle angegebenen Bereiche sind für sich genommen besonders vorteilhaft.

Die A-Zahl ergibt sich aus einem rechnerischen Bezug der Druckfestigkeit zur Trockenrohdichte. Sie repräsentiert die relative Druckfestigkeit des Poren- oder Schaumbetonformkörpers. Je größer die A-Zahl ist, desto besser ist das Druckfestigkeitsniveau. Die A-Zahl wird wie folgt berechnet:

$$\text{A-Zahl } [ - ] = \text{Druckfestigkeit } [N/mm^2] / ((\text{Trockenrohdichte } [kg/dm^3])^2 \cdot 0{,}016 \, [Ndm^6/mm^2kg^2])$$

Jeder oben angegebene A-Zahlbereich ist dabei für sich genommen besonders vorteilhaft.

Zudem wurde im Rahmen der Erfindung festgestellt, dass insbesondere auch die hygrischen Eigenschaften und der Sorptionsfeuchtegehalt im Vergleich zu einer reinen Kalkrezeptur verbessert sind. Dies kann unter anderem zu einer Verringerung der Wärmeleitfähigkeit (Bemessungswert der Wärmeleitfähigkeit bzw. $\lambda_{Design,unit}$) führen. Die Wärmeleitfähigkeit $\lambda_{Design,unit}$ ergibt sich aus dem Trockenwert der Wärmeleitfähigkeit $\lambda_{10,dry,unit}$ multipliziert mit dem Umrechnungsfaktor für den Feuchtegehalt $F_m$. Die Wärmeleitfähigkeit $\lambda_{Design,unit}$ berücksichtigt somit, dass die Wärmeleitfähigkeit des Materials während der Anwendung maßgeblich durch seinen Adsorptionsfeuchtegehalt beeinflusst wird.

Insbesondere weisen die erfindungsgemäß hergestellten Poren- oder Schaumbetonformkörper vorzugsweise eine Wärmeleitfähigkeit $\lambda_{10,dry,unit}$ von 0,039 bis 0,250 W/(m·K), bevorzugt von 0,039 bis 0,220 W/(m·K), insbesondere von 0,039 bis 0,130 W/(m·K), gemäß DIN EN 12664:2001-05 bzw. DIN EN 12667:2001-05 auf.

Insbesondere weisen die erfindungsgemäß hergestellten Poren- oder Schaumbetonformsteine oder die Poren- oder Schaumbetonbauteile vorzugsweise eine Wärmeleitfähigkeit $\lambda_{10,dry,unit}$ von 0,082 bis 0,250 W/(m·K), bevorzugt von 0,085 bis 0,160 W/(m·K), insbesondere von 0,088 bis 0,130 W/(m·K), gemäß DIN EN 12664:2001-05 auf.

Insbesondere weisen die erfindungsgemäß hergestellten Poren- oder Schaumbetondämmkörper vorzugsweise eine Wärmeleitfähigkeit $\lambda_{10,dry,unit}$ von 0,039 bis 0,050 W/(m·K), bevorzugt von 0,039 bis 0,045 W/(m·K), insbesondere von 0,039 bis 0,042 W/(m·K), gemäß DIN EN 12667:2001-05 auf.

Des Weiteren weisen die erfindungsgemäß hergestellten Poren- oder Schaumbetonformkörper vorzugsweise ein Gesamtschwindmaß $\varepsilon_{cs,tot}$ gemäß DIN EN 680:2006-03 von 0,2 bis 0,8 mm/m, bevorzugt von 0,2 bis 0,4 mm/m, auf.

Und der Adsorptionsfeuchtegehalt $u_{m,80}$ der erfindungsgemäß hergestellten Poren- oder Schaumbetonformkörper beträgt vorzugsweise 2 bis 8 M.-%, bevorzugt 2,5 bis 5 M.-%, besonders bevorzugt 2,5 bis 4,5 M.-%, gemäß DIN EN ISO 12571: 2013-12.

Zusammenfassend sind aus Frischbetonmassen, welche zwar Portlandzementklinkermehl, aber keinen zugesetzten Sulfatträger enthalten, überraschenderweise auf einfache Art und Weise Poren- oder Schaumbetonformkörper herstellbar mit guten mechanischen und hygrischen Eigenschaften.

Im Folgenden wird nun die Erfindung anhand von einigen Ausführungsbeispielen veranschaulicht.

**Ausführungsbeispiele:**

Im Rahmen der Ausführungsbeispiele wurden Porenbetonformkörper mit unterschiedlichen Rezepturen hergestellt. Die Herstellung der Porenbetonformkörper erfolgte dabei immer wie folgt:
Die Versuchsproben wurden mit einem Dissolvermischer bei 550 U/min (Scheibendurchmesser 12 cm) in einem 20 l Rührgefäß wie folgt gemischt:

1. Vorlage von Wasser und ggf. Rückschlamm und ggf. Additive im Mischgefäß
2. Zugabe von Quarzmehl, ggf. Kalksteinmehl, ggf. Porenbetonmehl Mischzeit 30 Sekunden
3. Zugabe der Bindemittel, Mischzeit 30 Sekunden
4. Aluminiumzugabe in Suspension (100 ml), Mischzeit 20 Sekunden
5. Abguss

Die Versuchsproben wurden nach 3 - 5 Stunden entschalt, auf den Härteboden umgesetzt und anschließend autoklaviert.

Die Autoklavierung begann mit einer Vakuumphase über 30 Minuten, dabei wurde ein Druck von 0,4 bar$_{abs}$ erreicht. Danach wurde der Druck über 1,5 Stunden linear auf 12 bar$_{abs}$ erhöht, 7 Stunden gehalten und danach, ebenfalls linear, über 1,5 Stunden auf Umgebungsdruck abgesenkt.

Für die Durchführung der Versuche wurden folgende Rohstoffe verwendet:

**Tabelle 1: Verwendete Rohstoffe**

| Material/Bezeichnung | Anmerkung | Hersteller |
|---|---|---|
| Kristallquarzmehl Dorsilit 16900 (1.-5. Versuchsreihe) | Spezifische Oberfläche nach Blaine 6.000 cm$^2$/g | Gebrüder Dorfner GmbH |
| Kristallquarzmehl KR500 (6. Versuchsreihe) | Spezifische Oberfläche nach Blaine 10.000 cm$^2$/g | Kreutz Mahlwerke GmbH |
| Weißfeinkalk WFK 11/6 | Kalklöschprüfung $t_{60}$ = 11 min | Fels Werke GmbH |
| Portlandzement CEM I 42,5 R(ft) | Spezifische Oberfläche nach Blaine 5000 cm$^2$/g | Dornburger Zement |
| Anhydrit Microanhydrit B | Technischer Anhydrit | Casea GmbH |
| Portlandzementklinkermehl | Spezifische Oberfläche nach Blaine 5210 cm$^2$/g | Buzzi Dyckerhoff |
| Kalksteinmehl | Spezifische Oberfläche nach Blaine 3.500 cm$^2$/g | Lafarge |
| Porenbetonmehl, sulfatfrei | < 1,0 mm, Schüttdichte 473 g/l | Xella T&F GmbH |
| Aluminiumpulver OT9/10 | 100 % Aluminium-Wirkstoffgehalt | Lerberghe, AVL |
| Aluminiumpaste N905/75 | 75 % Aluminium-Wirkstoffgehalt | Eckart GmbH |

**Tabelle 2: Eigenschaften Klinkermehl**

| | | |
|---|---|---|
| $SiO_2$ [1] | M.-% | 20,24 |
| $TiO_2$ [1] | M.-% | 0,26 |
| $Al_2O_3$ [1] | M.-% | 5,29 |
| $Fe_2O_3$ [1] | M.-% | 1,94 |
| $Mn_3O_4$ [1] | M.-% | 0,11 |
| MgO [1] | M.-% | 0,91 |
| CaO [1] | M.-% | 64,57 |
| $Na_2O$ [1] | M.-% | < 0,05 |
| $K_2O$ [1] | M.-% | 0,90 |
| $P_2O_5$ [1] | M.-% | 0,14 |
| Glühverlust | M.-% | 3,08 |
| $H_2O$ (berechnet.) | M.-% | 0,71 |
| $CO_2$ [2] | M.-% | 2,38 |
| $SO_3$ [2] | M.-% | 1,38 |
| Spezifische Oberfläche nach BLAINE [3] | $cm^2/g$ | 5210 |

[1] Bestimmt mittels Röntgenfluoreszenzanalyse unter Nutzung eines AXIOS PW 4400 der Firma PANalytical B.V.
[2] Bestimmt mittels Infrarotspektrometrie unter Nutzung eines Eltra CS-2000 von der Eltra GmbH
[3] Bestimmt nach der DIN EN 196-6:2017-05 unter Nutzung eines ToniPERM 6565 der Firma Toni Technik Baustoffprüfsysteme GmbH

**Tabelle 3: Verwendete Zusatzmittel**

| Hersteller Vertrieb | Produktbezeichnung | Beschreibung | Anwendungsgebiet |
|---|---|---|---|
| BK Giulini | Calgon N | Natriumpolyphosphat | Netz- und Dispergieradditiv |
| BASF | Dispex AA 4140 | Natriumacrylatpolymer | Netz- und Dispergieradditiv |
| CIMACHEM | PBTC | 2-Phosphono-1,2,4-butantricarbonsäure | Chelatbildner |
| BASF | SKY 519 | Polycarboxylatether | Betonzusatzmittel |
| BASF | Master X-Seed 120 | Kristallisationskeime (Seeding-Stoff) mit Poly-carboxylatether | Betonzusatzmittel |
| Nabaltec AG | Apyral | Aluminiumhydroxid | Funktionales Additiv |

**Versuchsreihe 1:**

Im Rahmen der ersten Versuchsreihe wurde das C/S-Verhältnis von erfindungsgemäßen zementklinkerhaltigen Rezepturen variiert. Hierzu wurden die Anteile an Quarzmehl, Weißfeinkalk und Portlandzementklinkermehl variiert:

**Tabelle 4: Zusammensetzungen der Rezepturen der 1. Versuchsreihe**

| Versuch | 1A | 1B | 1C | 1D | 1E | Rückschlamm |
|---|---|---|---|---|---|---|
| Gesamteinwaage Feststoffe [g] | 5000 | 5000 | 5000 | 5000 | 5000 | 7000 |
| | [M.-%] | [M.-%] | [M.-%] | [M.-%] | [M.-%] | [M.-%] |
| Quarzmehl | 48,0 | 46,0 | 41,0 | 38,0 | 34,0 | 46,0 |
| Klinkermehl | 16,0 | 17,0 | 19,5 | 21,0 | 23,0 | 22,0 |
| Weißfeinkalk | 16,0 | 17,0 | 19,5 | 21,0 | 23,0 | 22,0 |
| Kalksteinmehl | 10,0 | 10,0 | 10,0 | 10,0 | 10,0 | 10,0 |
| Rückschlamm (tr.) | 10,0 | 10,0 | 10,0 | 10,0 | 10,0 | 0,0 |
| Summe Feststoffe | 100 | 100 | 100 | 100 | 100 | 100 |
| Aluminiumpulver [1] | 0,14 | 0,14 | 0,14 | 0,14 | 0,14 | 0,20 |
| W/F [-] | 0,65 | 0,65 | 0,65 | 0,65 | 0,65 | 0,65 |
| Abgusstemperatur [°C] | 40+/-1 | 40+/-1 | 40+/-1 | 40+/-1 | 40+/-1 | 40+/-1 |

(fortgesetzt)

| Versuch | 1A | 1B | 1C | 1D | 1E | Rückschlamm |
|---|---|---|---|---|---|---|
| Gesamteinwaage Feststoffe [g] | 5000 | 5000 | 5000 | 5000 | 5000 | 7000 |
| | [M.-%] | [M.-%] | [M.-%] | [M.-%] | [M.-%] | [M.-%] |
| C/S- Verhältnis | 0,46 | 0,51 | 0,66 | 0,78 | 0,95 | 0,67 |

[1] Mengenangabe bezogen auf Summe Feststoffe

Der Rückschlamm wurde am Vortag angesetzt und ständig gerührt. Hierfür wurde das Material, wie es üblich ist, gemischt und abgegossen, der Kuchen aufgetrieben und anschließend unter Zusatz von Wasser mit demselben Mischer entporosiert und wieder verschlammt. Der Schlamm wurde danach ständig gerührt. Vor dem Einsatz in der Gießung wurde durch Zugabe von Wasser eine Rückschlammdichte von 1,35 kg/dm$^3$ eingestellt. Die Rückschlammtemperatur betrug zum Zeitpunkt der Verarbeitung 25 +/- 1 °C.

An den hergestellten Porenbetonformkörpern wurde jeweils die Trockenrohdichte gemäß DIN EN 772-13: 2000-09, die Druckfestigkeit gemäß DIN EN 772-1: 2011-07, die A-Zahl, die Adsorptionsfeuchte $u_{m,80}$ gemäß DIN EN ISO 12571: 2013-12 sowie das Schwindmaß $\varepsilon_{cs,tot}$ gemäß DIN EN 680:2006-03 ermittelt. Zudem wurde mittels Röntgendiffraktometrie die mineralogische Phasenzusammensetzung ermittelt. Dies erfolgte wie folgt: Den Porenbetonformkörpern wurde mittels handelsüblicher Ständerbohrmaschine (HSS-Bohrer, Durchmesser 24 mm) Bohrmehl entnommen. Diese Pulverproben wurden zunächst für 24 h bei 40°C im Trockenschrank getrocknet. Für die nachfolgende Nassmahlung wurden jeder Probe 10 M.-% innerer Standard Zinkit (ZnO der Firma J. T. Baker Avantor Performance Materials, Inc.) zugesetzt, das entspricht jeweils 1,8 g Substanz und 0,2 g ZnO. Die Nassmahlung in der Mikronenmühle (McCrone micronising mill) erfolgte in 10 ml 2-Propanol über 4 ½ min in PVC Mahlbechern mit ZrO$_2$ Mahlzylindern. Das Mahlgut wurde ausgespült, viermal mit je 5 ml 2-Propanol (AnalaR NORMA-PUR, VWR) nachgespült und 24 h über hartes Filterpapier (84 g/m$^2$, Nr. 1291; Fa. Sartorius) unter dem Abzug abfiltriert und bei Raumtemperatur (20°C) getrocknet. Das vom Filterpapier abgepinselte und 2 min im Achatmörser homogenisierte Pulver wurde zu einer Diffraktometer-Pulvertablette verpresst (Backloading Verfahren). Von jeder entnommenen Materialprobe wurde eine Pulvertablette präpariert und gemessen.

Die Messung der Proben erfolgte auf einem Panalytical MPD Pro Diffraktometer. Die qualitative Phasenbestimmung erfolgte mit der Software Panalytical HighScorePlus. Die Messbedingungen und weitere Angaben sind in Tabelle 5 genannt.

**Tabelle 5: Messbedingungen und weitere Angaben**

| Goniometer | Einheit | Panalytical MPD Pro |
|---|---|---|
| Winkelbereich | °2 Theta | 5-80 |
| Schrittweite | °2 Theta | 0,017 |
| Messzeit pro Schritt | s | 45 |
| Anodenmaterial | | Kupfer |
| Stromstärke I | mA | 40 |
| Spannung U | kV | 45 |
| Automatikblende | | |
| bestrahlte Probenlänge | mm | 10 |
| Detektor (Halbleitertechnik) | | X'Celerator (128 Kanäle) |
| **qualitative Auswertung:** | | |
| HighScore Plus | | 3.0e vom 30.01.2012 |
| Datenbankgrundlage | | PDF2 von 2004 |
| | | HighScore Plus ICSD |

Die quantitative Bestimmung erfolgte mit der Rietveld-Methode. Als Auswertesoftware diente Bruker AXS Topas (Version 5). Zur Bestimmung des amorphen Phasenanteils wurde dem Messpräparat 10 M.-% Zinkoxid (s.o.) als innerer Standard hinzugefügt und bei der Auswertung entsprechend abgezogen. Die restlichen Phasen einschließlich röntgenamorpher Phasen werden auf 100 % normiert.

Zur Auswertung des quantitativen Phasenbestandes wurden folgende Strukturen aus der ICSD-Datenbank (Inorganic Crystal Structure Database, Stand 2016) verwendet:

- 11Å-Tobermorit (# 92943)

- Quarz (# 34636)

- Anhydrit (# 15876)

- Katoit (# 49772)

- Calcit (# 18165)

- Zinkit (# 65120)

Die Ergebnisse der Messungen der mechanischen und hygrischen Eigenschaften der ersten Versuchsreihe sind in Tabelle 6 aufgeführt. Tabelle 7 zeigt die mineralogischen Phasenzusammensetzungen der Versuche der ersten Versuchsreihe.

**Tabelle 6: Ergebnisse der Messungen der mechanischen und hygrischen Eigenschaften der 1. Versuchsreihe**

| Versuch | C/S | Trockenrohdichte | Würfeldruckfestigkeit (Massekonstanz 50°C) | A-Zahl (Massekonstanz 50°C) | Adsorptionsfeuchte $u_{m,80}$ | Schwindmaß $\varepsilon_{cs,tot}$ |
|---|---|---|---|---|---|---|
| | [-] | [kg/dm$^3$] | [N/mm$^2$] | [-] | [M.-%] | [mm/m] |
| **1A** | 0,46 | 0,418 | 2,75 | 984 | 3,0 | 0,66 |
| **1B** | 0,51 | 0,425 | 3,91 | 1353 | 2,4 | 0,46 |
| **1C** | 0,66 | 0,443 | 5,27 | 1678 | 2,2 | 0,33 |
| **1D** | 0,78 | 0,442 | 5,15 | 1648 | 2,2 | 0,36 |
| **1E** | 0,95 | 0,461 | 4,38 | 1288 | 3,5 | 0,48 |

**Tabelle 7: Ergebnisse der Messungen der mineralogischen Phasenzusammensetzungen der 1. Versuchsreihe**

| Probennummer | Amorph | 11Å-Tobermorit | Quarz | Anhydrit | Katoit | Calcit |
|---|---|---|---|---|---|---|
| | [M.-%] | [M.-%] | [M.-%] | [M.-%] | [M.-%] | [M.-%] |
| **1A** | 36 | 29 | 23 | 0 | 2 | 10 |
| **1B** | 30 | 39 | 19 | 0 | 2 | 10 |
| **1C** | 27 | 51 | 11 | 0 | 2 | 9 |
| **1D** | 28 | 53 | 8 | 0 | 2 | 9 |
| **1E** | 40 | 37 | 7 | 0 | 4 | 12 |

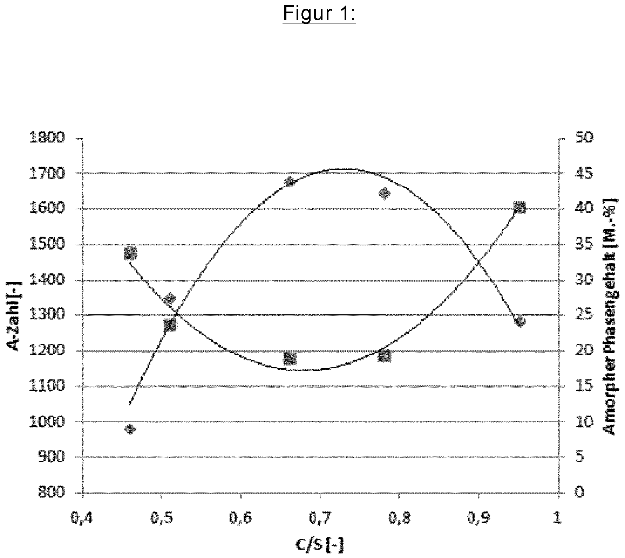

In Fig. 1 sind zudem die ermittelten A-Zahlen und der amorphe Phasengehalt über dem C/S-Verhältnis aufgetragen.

Bereits die erste Versuchsreihe belegt, dass alle Rezepturen gut prozessierbar sind und die hergestellten Porenbetonformkörper gute mechanische Festigkeitseigenschaften aufweisen. Das Bindemitteloptimum für die verwendete Quarzmehlfeinheit liegt dabei bei einem C/S-Verhältnis von ca. 0,66, was auch für herkömmliche Zementrezepturen mit Sulfatträger üblich ist.

Für höhere Quarzmehlfeinheiten liegt das Festigkeitsoptimum bei höheren C/S-Verhältnissen, bei niedrigen Feinheiten auch unter 0,46. Die Erfindung funktioniert bei jeglichen üblichen C/S-Verhältnissen, z.B. auch bei 0,38 oder 1,0.

**2. Versuchsreihe:**

In einer zweiten Versuchsreihe wurde das Quarzmehl teilweise durch Aluminiumhydroxid (Produktbezeichnung Apyral der Firma Nabaltec) ersetzt:

**Tabelle 8: Zusammensetzungen der Rezepturen der 2. Versuchsreihe**

| Versuch | 2A | 2B | 2C | 2D | 2E |
|---|---|---|---|---|---|
| **Gesamteinwaage Feststoffe [g]** | **5000** | **5000** | **5000** | **5000** | **5000** |
| | [%] | [%] | [%] | [%] | [%] |
| Quarzmehl | 45,6 | 45,3 | 44,9 | 43,3 | 42,3 |
| Klinkermehl | 21,7 | 21,8 | 21,9 | 22,2 | 23,0 |
| Weißfeinkalk | 21,7 | 21,8 | 21,9 | 22,2 | 23,0 |
| Kalksteinmehl | 11,0 | 11,1 | 11,3 | 11,3 | 11,7 |
| Summe Feststoffe | 100 | 100 | 100 | 100 | 100 |
| Aluminiumhydroxid [1] | 0,0 | 0,5 | 1,1 | 2,4 | 6,0 |
| Alupaste [1] | 0,16 | 0,16 | 0,16 | 0,16 | 0,17 |
| W/F [-] | 0,7 | 0,7 | 0,7 | 0,7 | 0,7 |
| Abgusstemperatur [°C] | 35+/-1 | 35+/-1 | 35+/-1 | 35+/-1 | 35+/-1 |

**[1] Mengenangabe bezogen auf Summe Feststoffe**

**Tabelle 9: Ergebnisse der Messungen der mechanischen und hygrischen Eigenschaf-ten der 2. Versuchsreihe**

| Versuch | Aluminiumhydroxid | Trockenrohdichte | Würfeldruckfestigkeit (Masse-konstanz 50°C) | A-Zahl (Masse-konstanz 50°C) | Adsorptionsfeuchte-gehalt $u_{m,80}$ | Gesamtschwindmaß $\varepsilon_{cs,tot}$ |
|---|---|---|---|---|---|---|
| | [M.-%] bezogen auf Feststoffe | [kg/dm$^3$] | [N/mm$^2$] | [-] | [M.-%] | [mm/m] |
| 2A | 0,0 | 0,402 | 4,14 | 1601 | 2,7 | 0,39 |
| 2B | 0,5 | 0,392 | 4,21 | 1712 | 2,6 | 0,38 |
| 2C | 1,1 | 0,386 | 3,64 | 1527 | 2,6 | 0,34 |
| 2D | 2,4 | 0,399 | 4,13 | 1621 | 2,6 | 0,36 |
| 2E | 6,0 | 0,403 | 3,92 | 1509 | 2,4 | 0,34 |

**Tabelle 10: Ergebnisse der Messungen der mineralogischen Phasenzusammensetzungen der 2. Versuchsreihe**

| Probennummer | Amorph | 11Å-Tobermorit | Quarz | Anhydrit | Katoit | Calcit |
|---|---|---|---|---|---|---|
| | [M.-%] | [M.-%] | [M.-%] | [M.-%] | [M.-%] | [M.-%] |
| 2A | 27 | 53 | 9 | 0 | 0 | 11 |
| 2B | 28 | 52 | 9 | 0 | 0 | 11 |
| 2C | 29 | 51 | 9 | 0 | 0 | 11 |
| 2D | 25 | 49 | 10 | 0 | 4 | 12 |
| 2E | 23 | 44 | 12 | 0 | 9 | 12 |

Es wurde festgestellt, dass sich ein geringer Zusatz von Aluminiumhydroxid positiv auf das Festigkeitsniveau der Porenbetonformkörper auswirkt. Der Tobermoritgehalt nimmt allerdings mit steigendem Gehalt von Aluminiumhydroxid ab.

**3. Versuchsreihe:**

Im Rahmen der dritten Versuchsreihe wurden drei unterschiedliche bauchemische Additive eingesetzt, nämlich der Kristallisationsbeschleuniger X-Seed 120, das Dispergieradditiv PBTC sowie das Fließmittel Sky 519. Die Konzentrationen der bauchemischen Additive entsprechen dabei den üblicherweise bei herkömmlichen Kalk-Zementrezepturen verwendeten Konzent**rationen:**

**Tabelle 11: Zusammensetzungen der Rezepturen der 3. Versuchsreihe**

| | 3A | 3B | 3C | 3D |
|---|---|---|---|---|
| Gesamteinwaage **Feststoffe** [g] | 5000 | 5000 | 5000 | 5000 |
| | [%] | [%] | [%] | [%] |
| Quarzmehl | 45,6 | 45,6 | 45,6 | 45,6 |
| Klinkermehl | 21,7 | 21,7 | 21,7 | 21,7 |
| Weissfeinkalk | 21,7 | 21,7 | 21,7 | 21,7 |
| Kalksteinmehl | 11,0 | 11,0 | 11,0 | 11,0 |
| Summe Feststoffe | 100,0 | 100,0 | 100,0 | 100,0 |
| X-seed 120 (sus.) [1] | 0,00 | 2,00 | 0,00 | 0,00 |
| SKY 519 (sus.) [1] | 0,00 | 0,00 | 0,10 | 0,00 |
| PBTC (fl.) [1] | 0,00 | 0,00 | 0,00 | 0,14 |
| Alupaste[1] | 0,22 | 0,22 | 0,22 | 0,22 |
| W/F [-] | 0,70 | 0,70 | 0,70 | 0,70 |
| Abgusstemperatur [°C] | 35+/-1 | 35+/-1 | 35+/-1 | 35+/-1 |

**[1] Mengenangabe bezogen auf Summe Feststoffe**

**Tabelle 12: Ergebnisse der Messungen der mechanischen und hygrischen Eigenschaften der 3. Versuchsreihe**

| Versuch | Additivanteil | Trockenrohdichte | Würfeldruckfestigkeit (Massekonstanz 50°C) | A-Zahl (Massekonstanz 50°C) | Adsorptionsfeuchte-gehalt $u_{m,80}$ | Gesamtschwind-maß $\varepsilon_{cs,tot}$ |
|---|---|---|---|---|---|---|
| | [%/FS] | [kg/dm$^3$] | [N/mm$^2$] | [-] | [M.-%] | [mm/m] |
| **3A** | 0,00 | 0,359 | 3,44 | 1668 | 2,3 | 0,38 |
| **3B** | 2,00 (X-SEED) | 0,369 | 3,80 | 1744 | 2,4 | 0,38 |
| **3C** | 0,10 (SKY519) | 0,360 | 3,63 | 1751 | 2,3 | 0,36 |
| **3D** | 0,14 (PBTC) | 0,335 | 2,92 | 1626 | 2,5 | 0,41 |

**Tabelle 13: Ergebnisse der Messungen der mineralogischen Phasenzusammensetzungen der 3. Versuchsreihe**

| Probennummer | Amorph [M.-%] | 11Å-Tobermorit [M.-%] | Quarz [M.-%] | Anhydrit [M.-%] | Katoit [M.-%] | Calcit [M.-%] |
|---|---|---|---|---|---|---|
| 3A | 28 | 52 | 10 | 0 | 0 | 10 |
| 3B | 26 | 55 | 10 | 0 | 0 | 10 |
| 3C | 28 | 53 | 10 | 0 | 0 | 10 |
| 3D | 29 | 52 | 10 | 0 | 0 | 10 |

Es hat sich gezeigt, dass die Additive, bis auf PBTC, einen positiven Einfluss auf das Festigkeitsniveau besitzen. Zudem werden auch die hygrischen Eigenschaften verbessert oder bleiben auf gleichem Niveau. Auch die Phasenanalyse zeigt, dass Sky 519 und X-Seed 120 tendenziell den Tobermoritgehalt erhöhen und den amorphen Phasengehalt verringern.

4. Versuchsreihe:

Im Rahmen der vierten Versuchsreihe wurden eine klassische Zement-Anhydritrezeptur (CAH), eine sulfatreduzierte Zementrezeptur (SRC), bei der der Sulfatträger ausschließlich aus dem Zement kommt, und eine erfindungsgemäße sulfatträgerfreie Rezeptur (KLINK) miteinander verglichen.

Die drei unterschiedlichen Bindemittelansätze wurden jeweils mit zwei unterschiedlichen Dispergiermitteln (Calgon N und Dispex AA 4041) sowie einem Fließmittel (Sky 519) versetzt:

Tabelle 14: Zusammensetzungen der Rezepturen der 4. Versuchsreihe

| Serie CAH | | | | |
|---|---|---|---|---|
| Versuch | 4A | 4B | 4C | 4D |
| Gesamteinwaage Feststoffe [g] | 3500 | 3500 | 3500 | 3500 |
| | [%] | [%] | [%] | [%] |
| Quarzmehl | 44,0 | 44,0 | 44,0 | 44,0 |
| Portlandzement | 21,0 | 21,0 | 21,0 | 21,0 |
| Klinkermehl | 0,0 | 0,0 | 0,0 | 0,0 |
| Weißfeinkalk | 20,9 | 20,9 | 20,9 | 20,9 |
| Anhydrit | 3,1 | 3,1 | 3,1 | 3,1 |
| Kalksteinmehl | 11,0 | 11,0 | 11,0 | 11,0 |
| Summe Feststoffe | 100,0 | 100,0 | 100,0 | 100,0 |
| Calgon (fest) [1] | 0,0 | 0,0 | 0,0 | 0,4 |
| Dispex (fl) [1] | 0,0 | 0,0 | 0,4 | 0,0 |
| Sky 519 (fl.) [1] | 0,0 | 0,4 | 0,0 | 0,0 |
| Aluminiumpulver[1] | 0,19 | 0,19 | 0,19 | 0,19 |
| W/F [-] | 0,70 | 0,70 | 0,70 | 0,70 |
| Abgusstemperatur [°C] | 40+/-1 | 40+/-1 | 40+/-1 | 40+/-1 |

**[1] Mengenangabe bezogen auf Summe Feststoffe**

| Serie SRC | | | | |
|---|---|---|---|---|
| Versuch | 4E | 4F | 4G | 4H |
| Gesamteinwaage Feststoffe [g] | 3500 | 3500 | 3500 | 3500 |
| | [%] | [%] | [%] | [%] |
| Quarzmehl | 45,6 | 45,6 | 45,6 | 45,6 |
| Portlandzement | 21,7 | 21,7 | 21,7 | 21,7 |
| Klinkermehl | 0,0 | 0,0 | 0,0 | 0,0 |
| Weißfeinkalk | 21,7 | 21,7 | 21,7 | 21,7 |
| Anhydrit | 0,0 | 0,0 | 0,0 | 0,0 |
| Kalksteinmehl | 11,0 | 11,0 | 11,0 | 11,0 |

(fortgesetzt)

**Serie SRC**

| Versuch | 4E | 4F | 4G | 4H |
|---|---|---|---|---|
| Gesamteinwaage Feststoffe [g] | **3500** | **3500** | **3500** | **3500** |
| | [%] | [%] | [%] | [%] |
| Summe Feststoffe | 100,0 | 100,0 | 100,0 | 100,0 |
| Calgon (fest) 1) | 0,0 | 0,0 | 0,0 | 0,4 |
| Dispex (fl) 1) | 0,0 | 0,0 | 0,4 | 0,0 |
| Sky 519 (fl.) 1) | 0,0 | 0,4 | 0,0 | 0,0 |
| Aluminiumpulver 1) | 0,19 | 0,19 | 0,19 | 0,19 |
| W/F [-] | 0,70 | 0,70 | 0,70 | 0,70 |
| Abgusstemperatur [°C] | 40+/-1 | 40+/-1 | 40+/-1 | 40+/-1 |

**1) Mengenangabe bezogen auf Summe Feststoffe**

**Serie KLINK**

| Versuch | 4I | 4J | 4K | 4L |
|---|---|---|---|---|
| Gesamteinwaage Feststoffe [g] | **3500** | **3500** | **3500** | **3500** |
| | [%] | [%] | [%] | [%] |
| Quarzmehl | 45,6 | 45,6 | 45,6 | 45,6 |
| Portlandzement | 0,0 | 0,0 | 0,0 | 0,0 |
| Klinkermehl | 21,7 | 21,7 | 21,7 | 21,7 |
| Weißfeinkalk | 21,7 | 21,7 | 21,7 | 21,7 |
| Anhydrit | 0,0 | 0,0 | 0,0 | 0,0 |
| Kalksteinmehl | 11,0 | 11,0 | 11,0 | 11,0 |
| Summe Feststoffe | 100,0 | 100,0 | 100,0 | 100,0 |
| Calgon (fest) 1) | 0,0 | 0,0 | 0,0 | 0,4 |
| Dispex (fl) 1) | 0,0 | 0,0 | 0,4 | 0,0 |
| Sky 519 (fl.) 1) | 0,0 | 0,4 | 0,0 | 0,0 |
| Aluminiumpulver 1) | 0,19 | 0,19 | 0,19 | 0,19 |
| W/F [-] | 0,70 | 0,70 | 0,70 | 0,70 |
| Abgusstemperatur [°C] | 40+/-1 | 40+/-1 | 40+/-1 | 40+/-1 |

**1) Mengenangabe bezogen auf Summe Feststoffe**

Um die Verarbeitbarkeit der Frischbetonmassen zu testen, wurde das Ausbreitmaß wie oben beschrieben bestimmt.

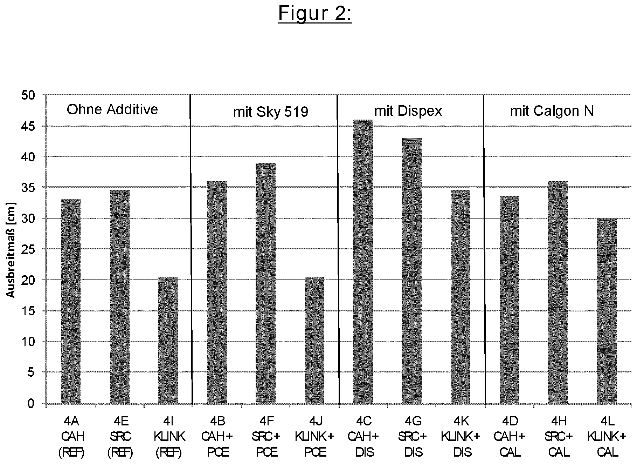

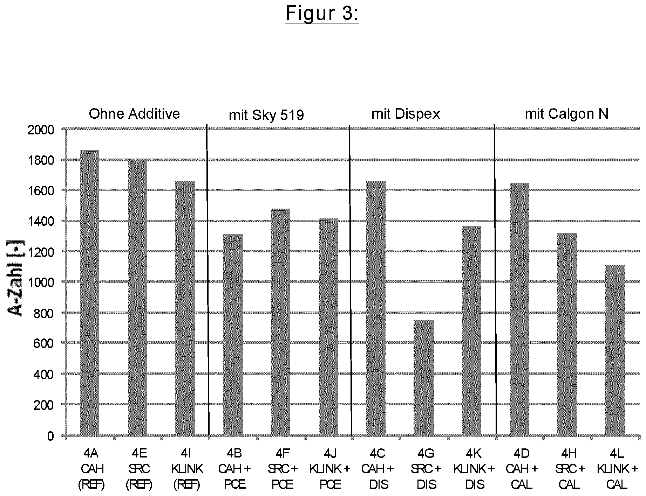

Die Ergebnisse der Messungen des Ausbreitmaßes sind in Fig. 2 zu erkennen. In Fig. 3 sind die ermittelten A-Zahlen aufgeführt.

Tabelle 15 zeigt die Ergebnisse der Messungen der mechanischen, thermischen und hygrischen Eigenschaften der vierten Versuchsreihe. Tabelle 16 zeigt die Ergebnisse der Messungen der mineralogischen Phasenzusammensetzungen der vierten Versuchsreihe:

**Tabelle 15: Ergebnisse der Messungen der mechanischen, thermischen und hygrischen Eigenschaften der 4. Versuchsreihe**

| Versuch | Rezeptur | Trockenrohdichte | Würfeldruckfestigkeit (Massekonstanz 50°C) | A-Zahl (Massekonstanz 50°C) | Wärmeleit-fähigkeit $\lambda_{10,dry,\ unit}$ | Adsorptionsfeuchte-gehalt $u_{m,80}$ |
|---|---|---|---|---|---|---|
| | | [kg/dm$^3$] | [N/mm$^2$] | [-] | W/(m·K) | [M.-%] |
| **4A** | CAH (REF) | 0,375 | 4,2 | 1867 | n. b. | 3,1 |
| **4B** | CAH + PCE | 0,558 | 6,53 | 1311 | n. b. | 3,1 |
| **4C** | CAH + DIS | 0,359 | 3,41 | 1654 | 0,0816 | 4,1 |
| **4D** | CAH + CAL | 0,344 | 3,11 | 1643 | 0,0797 | 3,4 |
| **4E** | SRC (REF) | 0,327 | 3,07 | 1794 | 0,0748 | 2,9 |
| **4F** | SRC + PCE | 0,437 | 4,52 | 1479 | n. b. | 3,1 |
| **4G** | SRC + DIS | 0,321 | 1,24 | 752 | 0,0688 | 4,6 |
| **4H** | SRC + CAL | 0,326 | 2,24 | 1317 | 0,0729 | 3,7 |
| **4I** | KLINK (REF) | 0,326 | 2,81 | 1653 | 0,0743 | 3,1 |
| **4J** | KLINK + PCE | 0,315 | 2,24 | 1411 | 0,0742 | 3,0 |
| **4K** | KLINK + DIS | 0,341 | 2,53 | 1360 | 0,0749 | 3,8 |
| **4L** | KLINK + CAL | 0,347 | 2,13 | 1106 | 0,0716 | 4,0 |

CAH: Zement-Anhydrit-Rezeptur; SRC: Sulfat reduzierte Zementrezeptur; KLINK: Klinkermehl-Rezeptur; PCE: Sky 519; DIS: Dispex AA 4140; CAL: Calgon N; REF: Referenz ohne Additive

**Tabelle 16: Ergebnisse der Messungen der mineralogischen Phasenzusammensetzungen der 4. Versuchsreihe**

| Probennummer | Amorph | 11Å-Tobermorit | Quarz | Anhydrit | Katoit | Calcit |
|---|---|---|---|---|---|---|
| | [M.-%] | [M.-%] | [M.-%] | [M.-%] | [M.-%] | [M.-%] |
| **4A** | 28 | 51 | 9 | 3 | 0 | 9 |
| **4B** | 27 | 51 | 10 | 2 | 0 | 10 |
| **4C** | 32 | 43 | 12 | 2 | 0 | 11 |
| **4D** | 34 | 45 | 9 | 2 | 0 | 10 |
| **4E** | 29 | 53 | 9 | 0 | 0 | 9 |
| **4F** | 28 | 53 | 10 | 0 | 0 | 9 |
| **4G** | 39 | 30 | 14 | 0 | 3 | 14 |
| **4H** | 34 | 46 | 9 | 0 | 0 | 11 |
| **4I** | 28 | 52 | 10 | 0 | 0 | 10 |
| **4J** | 27 | 51 | 9 | 0 | 2 | 11 |
| **4K** | 32 | 43 | 11 | 0 | 2 | 12 |
| **4L** | 32 | 44 | 9 | 0 | 2 | 13 |

Aus Fig. 2 ist erkennbar, dass die erfindungsgemäße sulfatträgerfreie Rezeptur (KLINK) ohne Additive ein deutlich geringeres Ausbreitmaß aufweist als die beiden sulfatträgerhaltigen Rezepturen. Dies war zu erwarten gewesen (Stichwort Löffelbinder).

Durch die Zugabe des Fließmittels (Sky 519) wurde das Ausbreitmaß bei der sulfatträgerfreien Rezeptur (KLINK+PCE) überraschenderweise im Vergleich zur sulfatträgerfreien Referenzrezeptur (KLINK (REF)) nicht erhöht. Die anderen Zusätze allerdings ergaben eine zum Teil deutliche Erhöhung des Ausbreitmaßes der erfindungsgemäßen sulfatträgerfreien Rezepturen (KLINK+CAL).

**5. Versuchsreihe:**

**Tabelle 17: Zusammensetzungen der Rezepturen der 5. Versuchsreihe**

| Versuch | 5A | 5B | 5C | 5D |
|---|---|---|---|---|
| **Gesamteinwaage Feststoffe [g]** | **5400** | **5400** | **5400** | **5400** |
| | [%] | [%] | [%] | [%] |
| Quarzmehl | 49,0 | 50,6 | 50,6 | 50,6 |
| Portlandzement | 18,6 | 19,2 | 0,0 | 0,0 |
| Klinkermehl | 0,0 | 0,0 | 19,2 | 19,2 |
| Weißfeinkalk | 19,6 | 20,2 | 20,2 | 20,2 |
| Anhydrit | 2,8 | 0,0 | 0,0 | 0,0 |
| Kalksteinmehl | 10,0 | 10,0 | 10,0 | 10,0 |
| Summe Feststoffe | 100,0 | 100,0 | 100,0 | 100,0 |
| | | | | |
| X-Seed 120 (fl.) [1] | 0,00 | 0,00 | 1,90 | 0,00 |
| Aluminiumpulver[1] | 0,12 | 0,12 | 0,12 | 0,15 |
| W/F [-] | 0,7 | 0,7 | 0,7 | 0,7 |
| Abgusstemperatur [°C] | 40+/1 | 40+/1 | 40+/1 | 40+/1 |
| Hebel Härte 3,5h | 520 | 440 | 420 | 280 |
| Hebel Härte 4,5h | n.b. | n.b. | 580 | 500 |

[1] Mengenangabe bezogen auf Summe Feststoffe

In der fünften Versuchsreihe konnte gezeigt werden, dass mit erfindungsgemäßen Rezepturen ähnliche Werte für die Grünstandshärte bzw. Grünstandsfestigkeit erreicht werden wie mit den üblichen Kalk-Zement-Rezepturen.

Eine Standardrezeptur (5A) mit 18,6 M.-% CEM I und 2,8 M.-% Sulfatträger zeigte nach 210 Minuten eine Festigkeit von 520 Skalenteilen (Skt), gemessen mit einem Taschenpenetrometer CT-421 und einem zylindrischen Prüfkopf Ø 20 mm. Ohne Zusatz von Sulfatträger (5B) wurde ein Wert von 440 Skt erreicht. Die erfindungsgemäße Rezeptur (5D) ohne Zusatz von bauchemischen Additiven erreichte in derselben Zeit eine Festigkeit von 280 Skt, bei Zusatz von 6,49 X-Seed (5C) betrug die Festigkeit 420 Skt. Nach einer Verlängerung der Standzeit um 60 Minuten erreichte (5D) eine Festigkeit von 500 Skt und (5C) von 580 Skt.

Die erfindungsgemäßen Rezepturen erreichen somit die notwendige Festigkeit zum Umsetzen des Porenbetonblockes vom Formboden auf die Schneidmaschine bzw. den Schneidrost. Die erfindungsgemäßen Rezepturen können deshalb auf allen in Porenbetonwerken üblichen Anlagen prozessiert werden. In vorteilhafter Weise können die erfindungsgemäßen Rezepturen auf Anlagen mit der sogenannten Kipptechnik prozessiert werden, sie sind aber nicht auf diese beschränkt. Die Autoklavierung der Poren- oder Schaumbetonformkörper kann in der für das jeweilige Werk üblichen Fahrweise erfolgen. Es sind keine Änderungen oder Anpassungen in der Autoklavierung notwendig.

### 6. Versuchsreihe:

Im Rahmen der sechsten Versuchsreihe wurden Rezepturen unter Zusatz von Porenbetonmehl und Rückschlamm prozessiert,

**Tabelle 18: Zusammensetzungen der Rezepturen der 6. Versuchsreihe**

| Versuch | 6A | 6B | Rückschlamm |
|---|---|---|---|
| Gesamteinwaage Feststoffe [g] | 3600 | 3600 | 800 |
| | [%] | [%] | [%] |
| Quarzmehl | 34,9 | 30,8 | 40,2 |
| Klinkermehl | 33,2 | 29,6 | 35,8 |
| Weißfeinkalk | 19,9 | 17,6 | 24,0 |
| Kalksteinmehl | 0,0 | 4,0 | 0,0 |
| Porenbetonmehl (tr.) | 10,0 | 8,0 | 0,0 |
| Rückschlamm (tr.) | 2,0 | 10,0 | 0 |
| Summe Feststoffe | 100,0 | 100,0 | 100,0 |
| | | | |
| Aluminiumpaste [1] | 0,21 | 0,21 | 0,21 |
| W/F [-] | 1,1 | 1,1 | 1,1 |
| Abgusstemperatur [°C] | 39+/-1 | 39+/-1 | 39+/-1 |

**[1] Mengenangabe bezogen auf Summe Feststoffe**

Der Rückschlamm wurde am Gießtag wie unter Versuchsreihe 1 beschrieben angesetzt und ständig gerührt. Vor dem Einsatz in der Gießung wurde durch Zugabe von Wasser eine Rückschlammdichte von 1,20 kg/dm$^3$ eingestellt. Die Rückschlammtemperatur betrug zum Zeitpunkt der Verarbeitung 25 +/- 1 °C.

Die Autoklavierung begann mit einer Vakuumphase über 30 Minuten, dabei wurde ein Druck von 0,4 bar$_{abs}$ erreicht. Danach wurde der Druck über 6 Stunden linear auf 12 bar$_{abs}$ erhöht, 6 Stunden gehalten und danach, ebenfalls linear, über 6 Stunden auf Umgebungsdruck abgesenkt.

Tabelle 19 zeigt die Ergebnisse der Messungen der mechanischen Eigenschaften der sechsten Versuchsreihe, Tabelle 20 die Ergebnisse der Messungen der mineralogischen Phasenzusammensetzungen:

**Tabelle 19: Ergebnisse der Messungen der mechanischen Eigenschaften der 6. Versuchsreihe**

| Versuch | C/S | Trockenrohdichte | Würfeldruckfestigkeit (Massekonstanz 50°C) | A-Zahl (Massekonstanz 50°C) |
|---|---|---|---|---|
| | [-] | [kg/dm$^3$] | [N/mm$^2$] | [-] |
| **6A** | 0,92 | 0,275 | 2,67 | 2207 |
| **6B** | 0,92 | 0,266 | 2,42 | 2138 |

**Tabelle 20: Ergebnisse der Messungen der mineralogischen Phasenzusammensetzungen der 6. Versuchsreihe**

| Probennummer | Amorph | 11Å-Tobermorit | Quarz | Anhydrit | Katoit | Calcit |
|---|---|---|---|---|---|---|
| | [M.-%] | [M.-%] | [M.-%] | [M.-%] | [M.-%] | [M.-%] |
| **6A** | 38 | 59 | 1 | 0 | 0 | 2 |
| **6B** | 37 | 53 | 1 | 0 | 3 | 6 |

Die Ergebnisse der sechsten Versuchsreihe belegen, dass mit erfindungsgemäßen Rezepturen der Einsatz von Porenbetonmehl problemlos möglich ist und A-Zahlen über 2200 erreicht werden können.

**Patentansprüche**

1.  Verfahren zur Herstellung von hydrothermal gehärteten Poren- oder Schaumbetonformkörpern, mit folgenden Verfahrensschritten:

    a) Herstellen einer Frischbetonmasse enthaltend Portlandzementklinkermehl, Branntkalk und/oder Kalkhydrat, gemahlenen Quarz, vorzugsweise Rückschlamm, Wasser und mindestens ein Treibmittel oder vorgefertigten Schaum oder einen Schaumbildner,
    b) Gegebenenfalls Aufschäumen der Schaumbildner enthaltenden Frischbetonmasse durch Rühren,
    c) Gießen der gießfertigen Frischbetonmasse in eine Gießform,
    d) Gegebenenfalls Auftreiben lassen der Frischbetonmasse,
    e) Ansteifen lassen der Frischbetonmasse zu einem Poren- oder Schaumbetonkuchen,
    f) Schneiden des Poren- oder Schaumbetonkuchens in einzelne Poren- oder Schaumbetonformkörper,
    g) Härten der Poren- oder Schaumbetonformkörper im Autoklaven,

    **dadurch gekennzeichnet, dass**
    die Frischbetonmasse keinen Sulfatträger als Erstarrungsregler enthält und die Frischbetonmasse vorzugsweise kein Magnesiumcarbonat als Zusatzstoff aufweist.

2.  Verfahren nach Anspruch 1,
    **dadurch gekennzeichnet, dass**
    eine Frischbetonmasse hergestellt wird, die einen Gehalt an Portlandzementklinkermehl von 5 bis 45 M.-%, bevorzugt 10 bis 35 M.-%, besonders bevorzugt 10 bis 25 M.-%, bezogen auf den Feststoffanteil in der Frischbetonmasse, aufweist.

3.  Verfahren nach Anspruch 1 oder 2,
    **dadurch gekennzeichnet, dass**
    eine Frischbetonmasse mit einem Wasser/Feststoff-Wert von 0,45 bis 1,5, bevorzugt 0,55 bis 1,0, besonders bevorzugt 0,6 bis 1,0, hergestellt wird.

4.  Verfahren nach einem der vorhergehenden Ansprüche,
    **dadurch gekennzeichnet, dass**
    der Quarz mengenmäßig den überwiegenden Anteil an $SiO_2$ in der Frischbetonmasse ausmacht.

5.  Verfahren nach einem der vorhergehenden Ansprüche,
    **dadurch gekennzeichnet, dass**

    eine Frischbetonmasse hergestellt wird, die

    a) einen Gehalt an Quarz von 25 bis 80 M.-%, bevorzugt 30 bis 70 M.-%, besonders bevorzugt 30 bis 45 M.-%, bezogen auf den Feststoffanteil in der Frischbetonmasse, und/oder
    b) einen Gehalt an Branntkalk von 5 bis 25 M.-%, bevorzugt 10 bis 25 M.-%, besonders bevorzugt 15 bis 25 M.-%, bezogen auf den Feststoffanteil in der Frischbetonmasse, und/oder
    c) einen Gehalt an Rückschlamm (Trockenmasse) von 2 bis 35 M.-%, vorzugsweise 2 bis 25 M.-%, bevorzugt 2 bis 20 M.-%, besonders bevorzugt 2 bis 17 M.-%, ganz besonders bevorzugt 10 bis 15 M.-%, bezogen auf den Feststoffanteil in der Frischbetonmasse, und/oder

d) einen Gehalt an Porenbetonmehl von 0 bis 60 M.-%, bevorzugt 1 bis 30 M.-%, besonders bevorzugt 1 bis 12 M.-%, bezogen auf den Feststoffanteil in der Frischbetonmasse, und/oder

e) einen Gehalt an inertem Gesteinsmehl, bevorzugt Kalksteinmehl, von 0 bis 20 M.-%, bevorzugt 0 bis 17 M.-%, bezogen auf den Feststoffanteil in der Frischbetonmasse,

aufweist.

6. Verfahren nach einem der vorhergehenden Ansprüche,
**dadurch gekennzeichnet, dass**
eine Treibmittel oder Schaumbildner enthaltende Frischbetonmasse hergestellt wird, die vor dem Aufschäumen oder Auftreiben ein Ausbreitmaß gemäß DIN EN 12350-5: 2009-08 von 20 bis 45 cm, bevorzugt von 25 bis 40 cm, aufweist.

7. Verfahren nach einem der vorhergehenden Ansprüche,
**dadurch gekennzeichnet, dass**
eine Frischbetonmasse hergestellt wird, die einen Kristallisationsbeschleuniger enthält, vorzugsweise in einer Menge von 0,5 bis 5 M.-%, bevorzugt 1 bis 3 M.-%, bezogen auf den Feststoffanteil in der Frischbetonmasse.

8. Verfahren nach einem der vorhergehenden Ansprüche,
**dadurch gekennzeichnet, dass**
der Poren- oder Schaumbetonkuchen nach dem Ansteifen und vor dem Schneiden auf eine seiner Längsseiten gekippt wird, wobei der Poren- oder Schaumbetonkuchen vorzugsweise auf eine Formlängswand der Gießform gekippt wird und anschließend die anderen Formwände der Gießform abgenommen werden, wobei vorzugsweise

a) der geschnittene Poren- oder Schaumbetonkuchen auf der Formlängswand stehend gehärtet wird, oder
b) der geschnittene Poren- oder Schaumbetonkuchen nach dem Schneiden in eine liegende Position zurück- oder durchgekippt wird und vorzugsweise in der liegenden Position gehärtet wird, wobei vorzugsweise nach dem Zurück- oder Durchkippen eine Bodenschicht des Poren- oder Schaumbetonkuchens entfernt wird, oder
c) der geschnittene Poren- oder Schaumbetonkuchen nach dem Schneiden in eine liegende Position zurück- oder durchgekippt wird, nach dem Zurück- oder Durchkippen eine Bodenschicht des Poren- oder Schaumbetonkuchens entfernt wird und der Poren- oder Schaumbetonkuchen anschließend wieder in eine stehende Position zurückgekippt wird und vorzugsweise in der stehenden Position gehärtet wird.

9. Verfahren nach einem der Ansprüche 1 bis 7,
**dadurch gekennzeichnet, dass**
nach dem Ansteifen des Poren- oder Schaumbetonkuchens der grüne Poren- oder Schaumbetonkuchen angehoben und versetzt wird, insbesondere auf der jeweiligen Schneidunterlage abgesetzt wird, wobei vorzugsweise

a) nach dem Ansteifen Seitenwände der Gießform weggeklappt werden, so dass der Poren- oder Schaumbetonkuchen auf einer Formunterseite der Gießform steht und anschließend der grüne Poren- oder Schaumbetonkuchen, vorzugsweise über seine Längsseiten, mit einem Greifer gegriffen, angehoben und versetzt wird, oder
b) nach dem Ansteifen des Poren- oder Schaumbetonkuchens die Seitenwände der Gießform gelöst werden, so dass der Poren- oder Schaumbetonkuchen auf der Formunterseite der Gießform steht und anschließend der grüne Poren- oder Schaumbetonkuchen unter Nutzung der Seitenwände als Greifbacken über seine Längsseiten, mit einem Greifer gegriffen, angehoben und versetzt wird, oder
c) nach dem Ansteifen des Poren- oder Schaumbetonkuchens die miteinander verbundenen Seitenwände der Gießform von der Formunterseite gelöst werden, so dass der Poren- oder Schaumbetonkuchen auf der Formunterseite der Gießform steht und ein nach unten und oben offener Kasten gebildet wird und anschließend der grüne Poren- oder Schaumbetonkuchen durch Greifen der miteinander verbundenen vier Seitenwände der Gießform und mit einem Vakuumsauger, der auf die Oberseite des Kastens aufgesetzt wird und den Poren- oder Schaumbetonkuchen ansaugt, angehoben und versetzt wird.

10. Verfahren nach einem der vorhergehenden Ansprüche,
**dadurch gekennzeichnet, dass**

a) Poren- oder Schaumbetonformkörper hergestellt werden, die bei Auslaugung eine Sulfatkonzentration $\leq 100$ mg/l, bevorzugt $\leq 50$ mg/l, Sulfat im Eluat gemäß DIN12457-4:2003-01 (DEV S 4) aufweisen, und/oder

b) Poren- oder Schaumbetonformkörper mit einem Gehalt an 11Å Tobermorit, bezogen auf die Trockenmasse des jeweiligen Poren- oder Schaumbetonformkörpers, von 25 bis 60 M.-%, bevorzugt 30 bis 55 M.-%, bestimmt mittels Röntgendiffraktometrie, und/oder

c) Poren- oder Schaumbetonformkörper mit einer Wärmeleitfähigkeit $\lambda_{10,dry,unit}$ von 0,039 bis 0,250 W/(m·K), bevorzugt von 0,039 bis 0,220 W/(m·K), insbesondere von 0,039 bis 0,130 W/(m·K), gemäß DIN EN 12664: 2001-05 und DIN EN 12667:2001-05, und/oder

d) Poren- oder Schaumbetonformkörper mit einem Gesamtwert des Trocknungsschwindens $\varepsilon_{cs,tot}$ gemäß DIN EN 680:2006-03 von 0,2 bis 0,8 mm/m, bevorzugt von 0,2 bis 0,4 mm/m, und/oder

e) Poren- oder Schaumbetonformkörper mit einer Trockenrohdichte $\rho_0$ von 70 bis 800 kg/m$^3$, bevorzugt 85 bis 600 kg/m$^3$, gemäß DIN EN 772-13: 2000-09, und/oder

f) Poren- oder Schaumbetonformkörper mit einem Adsorptionsfeuchtegehalt $u_{m,80}$ von 2 bis 8 M.-%, bevorzugt 3 bis 5 M.-%, besonders bevorzugt 2,5 bis 4,5 M.-% gemäß DIN EN ISO 12571: 2013-12, und/oder

g) Poren- oder Schaumbetonformkörper mit einer Druckfestigkeit von 0,1 bis 10 N/mm$^2$, bevorzugt von 0,15 bis 6 N/mm$^2$,

hergestellt werden.

11. Verfahren nach einem der vorhergehenden Ansprüche,
**dadurch gekennzeichnet, dass**

Poren- oder Schaumbetonformkörper mit einer A-Zahl
zwischen 300 und 2600 [-], oder
zwischen 1000 und 2600 [-], oder
zwischen 1000 und 2200 [-], oder
zwischen 1000 und 2000 [-], oder
zwischen 600 und 2000 [-], oder
bevorzugt zwischen 1000 und 1800 [-],
hergestellt werden,
wobei die A-Zahl wie folgt berechnet wird:

$$\text{A-Zahl } [ - ] = \text{Druckfestigkeit } [\text{N/mm}^2] / ((\text{Trockenrohdichte } [\text{kg/dm}^3])^2 \cdot 0,016 \, [\text{Ndm}^6/\text{mm}^2\text{kg}^2])$$

12. Verfahren nach einem der vorhergehenden Ansprüche,
**dadurch gekennzeichnet, dass**

Poren- oder Schaumbetonsteine

a) mit einer Wärmeleitfähigkeit $\lambda_{10,dry,unit}$ von 0,082 bis 0,250 W/(m·K), bevorzugt von 0,085 bis 0,160 W/(m·K), insbesondere von 0,088 bis 0,130 W/(m·K), gemäß DIN EN 12664: 2001-05, und/oder

b) mit einer Trockenrohdichte $\rho_0$ von 220 bis 800 kg/m$^3$, bevorzugt von 255 bis 600 kg/m$^3$, gemäß DIN EN 772-13: 2000-09, und/oder

c) mit einer Druckfestigkeit von 1,5 bis 10 N/mm$^2$, bevorzugt von 1,5 bis 6 N/mm$^2$, gemäß DIN EN 772-1: 2011-07,

hergestellt werden.

13. Verfahren nach einem der Ansprüche 1 bis 11,
**dadurch gekennzeichnet, dass**

bewehrte Poren- oder Schaumbetonbauteile

a) mit einer Trockenrohdichte $\rho_0$ von 220 bis 800 kg/m$^3$, bevorzugt von 255 bis 600 kg/m$^3$, gemäß DIN EN 678:1993, und/oder

b) mit einer Druckfestigkeit von 1,5 bis 10 N/mm$^2$, bevorzugt von 1,5 bis 6 N/mm$^2$, gemäß DIN EN 679:2005-09,

hergestellt werden.

**EP 3 789 362 B1**

14. Verfahren nach einem der Ansprüche 1 bis 11,
**dadurch gekennzeichnet, dass**

a) Poren- oder Schaumbetondämmkörpermit einer Wärmeleitfähigkeit $\lambda_{10,dry,unit}$ von 0,039 bis 0,050 W/(m·K), bevorzugt von 0,039 bis 0,045 W/(m·K), insbesondere von 0,039 bis 0,042 W/(m·K), gemäß DIN EN 12667:2001-05, und/oder
b) Poren- oder Schaumbetondämmkörper, insbesondere Poren- oder Schaumbetondämmplatten, mit einer Trockenrohdichte $\rho_0$ von 70 bis 150 kg/m$^3$, bevorzugt von 85 bis 115 kg/m$^3$, gemäß DIN EN 1602: 2013-05, und/oder
c) Poren- oder Schaumbetondämmkörper, insbesondere Poren- oder Schaumbetondämmplatten, mit einer Druckfestigkeit von 0,1 bis 0,6 N/mm$^2$, bevorzugt von 0,15 bis 0,4 N/mm$^2$, gemäß DIN EN 826:2013, und Konditionierung bei 40°C auf Massekonstanz,

hergestellt werden.

**Claims**

1. Method for the production of hydrothermally hardened aerated or foamed concrete molded bodies, comprising the following method steps:

a) Preparing a fresh concrete mass containing Portland cement clinker meal, quicklime and/or hydrated lime, ground quartz, preferably return slurry, water and at least one expanding agent or prefabricated foam or a foaming agent,
b) If applicable, foaming the fresh concrete mass containing the foaming agent by stirring,
c) Pouring the ready-to-pour fresh concrete mass into a casting mold,
d) If necessary, allowing the fresh concrete mass to expand,
e) Allowing the fresh concrete mass to stiffen to form an aerated or foamed concrete cake,
f) Cutting the aerated or foamed concrete cake into individual aerated or foamed concrete molded bodies,
g) Hardening the aerated or foamed concrete molded bodies in an autoclave,

**characterized in that**
the fresh concrete mass does not contain a sulfate carrier as a setting regulator and the fresh concrete mass preferably does not contain magnesium carbonate as an additive.

2. Method according to claim 1,
**characterized in that**
a fresh concrete mass is prepared which comprises a Portland cement clinker meal content of 5 to 45 ma.-%, preferably 10 to 35 ma.-%, particularly preferably 10 to 25 ma.-%, relative to the solids content in the fresh concrete mass.

3. Method according to claim 1 or 2,
**characterized in that**
a fresh concrete mass with a water/solids ratio of 0.45 to 1.5, preferably 0.55 to 1.0, particularly preferably 0.6 to 1.0, is prepared.

4. Method according to any one of the preceding claims,
**characterized in that**
quartz makes up the majority of $SiO_2$ in the fresh concrete mass.

5. Method according to any one of the preceding claims,
**characterized in that**
a fresh concrete mass is prepared, which comprises

a) a quartz content of 25 to 80 ma.-%, preferably 30 to 70 ma.-%, particularly preferably 30 to 45 ma.-%, relative to the solids content in the fresh concrete mass, and/or
b) a quicklime content of 5 to 25 ma.-%, preferably 10 to 25 ma.-%, particularly preferably 15 to 25 ma.-%, relative to the solids content in the fresh concrete mass, and/or

c) a return slurry content (dry mass) of 2 to 35 ma.-%, preferably 2 to 25 ma.-%, preferably 2 to 20 ma.-%, particularly preferably 2 to 17 ma.-%, most preferably 10 to 15 ma.-%, relative to the solids content in the fresh concrete mass, and/or

d) an aerated concrete meal content of 0 to 60 ma.-%, preferably 1 to 30 ma.-%, particularly preferably 1 to 12 ma.-%, relative to the solids content in the fresh concrete mass, and/or

e) a content of inert rock flour, preferably limestone powder, of 0 to 20 ma.-%, preferably 0 to 17 ma.-%, relative to the solids content in the fresh concrete mass.

6. Method according to any one of the preceding claims,
**characterized in that**
a fresh concrete mass containing an expanding agent or foaming agent is prepared, which comprises a slump in accordance with DIN EN 12350-5: 2009-08 of 20 to 45 cm, preferably 25 to 40 cm, before foaming or expanding.

7. A method according to any one of the preceding claims,
**characterized in that**
a fresh concrete mass is produced which contains a crystallization accelerator, preferably in an amount of 0.5 to 5 ma.-%, preferably 1 to 3 ma.-%, relative to the solids content in the fresh concrete mass.

8. Method according to any one of the preceding claims,
**characterized in that**
the aerated or foamed concrete cake is tilted onto one of its longitudinal sides after stiffening and before cutting, the aerated or foamed concrete cake preferably being tilted onto a longitudinal mold wall of the casting mold and the other mold walls of the casting mold then being removed, wherein preferably

a) the cut aerated or foamed concrete cake is hardened standing on the longitudinal mold wall, or
b) the cut aerated or foamed concrete cake is tilted back or through into a lying position after cutting and is preferably hardened in the lying position, a bottom layer of the aerated or foamed concrete cake preferably being removed after tilting back or through, or
c) the cut aerated or foamed concrete cake is tilted back or through into a lying position after cutting, a bottom layer of the aerated or foamed concrete cake is removed after tilting back or through, and the aerated or foamed concrete cake is then tilted back into a standing position and preferably hardened in the standing position.

9. Method according to any one of claims 1 to 7,
**characterized in that**
after stiffening of the aerated or foamed concrete cake, the green aerated or foamed concrete cake is lifted and displaced, in particular deposited on the respective cutting base, wherein preferably

a) after stiffening, side walls of the casting mold are folded away so that the aerated or foamed concrete cake stands on a mold underside of the casting mold and then the green aerated or foamed concrete cake is gripped, lifted and displaced, preferably via its longitudinal sides, with a gripper, or
b) after stiffening of the aerated or foamed concrete cake, the side walls of the casting mold are released so that the aerated or foamed concrete cake stands on the mold underside of the casting mold and then the green aerated or foamed concrete cake is gripped, lifted and displaced with a gripper via its longitudinal sides using the side walls as gripper jaws, or
c) after stiffening of the aerated or foamed concrete cake, the interconnected side walls of the casting mold are released from the mold underside, so that the aerated or foamed concrete cake stands on the mold underside of the casting mold and a box open at the top and bottom is formed and then the green aerated or foamed concrete cake is lifted and displaced by gripping the four interconnected side walls of the casting mold and with a vacuum suction cup, which is placed on the top of the box and sucks the aerated or foamed concrete cake.

10. Method according to any one of the preceding claims,
**characterized in that**

a) aerated or foamed concrete molded bodies are produced which comprise a sulfate concentration $\leq 100$ mg/l, preferably $\leq 50$ mg/l, of sulfate in the eluate according to DIN 12457-4:2003-01 (DEV S 4) upon leaching, and/or
b) aerated or foamed concrete molded bodies with a content of 11Å tobermorite, relative to the dry mass of the respective aerated or foamed concrete molded body, of 25 to 60 ma.-%, preferably 30 to 55 ma.-%, determined by X-ray diffraction, and/or

c) aerated or foamed concrete molded bodies with a thermal conductivity $\lambda_{10,dry,unit}$ of 0.039 to 0.250 W/(m·K), preferably from 0.039 to 0.220 W/(m·K), in particular from 0.039 to 0.130 W/(m·K), in accordance with DIN EN 12664: 2001-05 and DIN EN 12667:2001-05, and/or

d) aerated or foamed concrete molded bodies with a total value of the drying shrinkage $\varepsilon_{cs,tot}$ according to DIN EN 680:2006-03 of 0.2 to 0.8 mm/m, preferably 0.2 to 0.4 mm/m, and/or

e) aerated or foamed concrete molded bodies with a dry density $\rho_0$ of 70 to 800 kg/m$^3$, preferably 85 to 600 kg/m$^3$, in accordance with DIN EN 772-13: 2000-09, and/or

f) aerated or foamed concrete molded bodies with an adsorption moisture content $u_{m,80}$ of 2 to 8 ma.-%, preferably 3 to 5 ma.-%, particularly preferably 2.5 to 4.5 ma.-% according to DIN EN ISO 12571: 2013-12, and/or

g) aerated or foamed concrete molded bodies with a compressive strength of 0.1 to 10 N/mm$^2$, preferably 0.15 to 6 N/mm$^2$,

are produced.

**11.** A method according to any one of the preceding claims,
**characterized in that**

aerated or foamed concrete molded bodies with an A-number
between 300 and 2600 [-], or
between 1000 and 2600 [-], or
between 1000 and 2200 [-], or
between 1000 and 2000 [-], or
between 600 and 2000 [-], or
preferably between 1000 and 1800 [-],
are produced,
where the A-number is calculated as follows:

A-number [ - ] = compressive strength [N/mm$^2$] / ((dry density [kg/dm$^3$])$^2$ · 0.016 [Ndm$^6$/mm$^2$kg$^2$])

**12.** A method according to any one of the preceding claims,
**characterized in that**

aerated or foamed concrete bricks

a) with a thermal conductivity $\lambda_{10,dry,unit}$ of 0.082 to 0.250 W/(m·K), preferably from 0.085 to 0.160 W/(m·K), in particular from 0.088 to 0.130 W/(m·K), in accordance with DIN EN 12664: 2001-05, and/or

b) with a dry density $\rho_0$ of 220 to 800 kg/m$^3$, preferably 255 to 600 kg/m$^3$, in accordance with DIN EN 772-13: 2000-09, and/or

c) with a compressive strength of 1.5 to 10 N/mm$^2$, preferably 1.5 to 6 N/mm$^2$, in accordance with DIN EN 772-1: 2011-07,

are produced.

**13.** Method according to any one of claims 1 to 11,
**characterized in that**

reinforced aerated or foamed concrete components

a) with a dry density $\rho_0$ of 220 to 800 kg/m$^3$, preferably 255 to 600 kg/m$^3$, in accordance with DIN EN 678:1993, and/or

b) with a compressive strength of 1.5 to 10 N/mm$^2$, preferably 1.5 to 6 N/mm$^2$, in accordance with DIN EN 679:2005-09,

are produced.

**14.** Method according to any one of claims 1 to 11,
**characterized in that**

a) aerated or foamed concrete insulating bodies with a thermal conductivity $\lambda_{10,dry,unit}$ of 0.039 to 0.050 W/(m·K), preferably from 0.039 to 0.045 W/(m·K), in particular from 0.039 to 0.042 W/(m·K), in accordance with DIN EN 12667:2001-05, and/or

b) aerated or foamed concrete insulating bodies, in particular aerated or foamed concrete insulating boards, with a dry density $\rho_0$ of 70 to 150 kg/m$^3$, preferably 85 to 115 kg/m$^3$, in accordance with DIN EN 1602: 2013-05, and/or

c) aerated or foamed concrete insulating bodies, in particular aerated or foamed concrete insulating boards, with a compressive strength of 0.1 to 0.6 N/mm$^2$, preferably 0.15 to 0.4 N/mm$^2$, in accordance with DIN EN 826:2013, and conditioning at 40°C to constant mass,

are produced.

**Revendications**

1. Procédé de fabrication de corps moulés en béton cellulaire ou moussé durcis par voie hydrothermale, comprenant les étapes de procédé suivantes :

a) Fabrication d'une masse de béton frais contenant de la farine de clinker de ciment Portland, de la chaux vive et/ou de la chaux hydratée, du quartz broyé, de préférence de la boue de retour, de l'eau et au moins un agent d'expansion ou une mousse préfabriquée ou un agent moussant,

b) Le cas échéant, faire mousser la masse de béton frais contenant l'agent moussant en la remuant,

c) Couler la masse de béton frais prête à être coulée dans un moule de coulée,

d) Le cas échéant, faire gonfler la masse de béton frais,

e) Laisser la masse de béton frais se raidir pour former un gâteau de béton cellulaire ou moussé,

f) Découper le gâteau de béton cellulaire ou moussé en corps moulés individuels en béton cellulaire ou moussé,

g) Durcissement des corps moulés en béton cellulaire ou moussé dans un autoclave,

**caractérisé en ce que**
la masse de béton frais ne contient pas de porteur de sulfate comme régulateur de prise et la masse de béton frais ne présente de préférence pas de carbonate de magnésium comme additif.

2. Procédé selon la revendication 1,
**caractérisé en ce que**
une masse de béton frais est fabriquée, qui présente une teneur en farine de clinker de ciment Portland de 5 à 45 % en masse, de préférence de 10 à 35 % en masse, de manière particulièrement préférée de 10 à 25 % en masse, par rapport à la proportion de matières solides dans la masse de béton frais.

3. Procédé selon la revendication 1 ou 2,
**caractérisé en ce que**
une masse de béton frais est fabriquée avec un rapport eau/solide de 0,45 à 1,5, de préférence de 0,55 à 1,0, de manière particulièrement préférée de 0,6 à 1,0.

4. Procédé selon l'une quelconque des revendications précédentes,
**caractérisé en ce que**
le quartz représente, en termes de quantité, la plupart de SiO$_2$ dans la masse de béton frais.

5. Procédé selon l'une quelconque des revendications précédentes,
**caractérisé en ce que**
une masse de béton frais est produite qui présente

a) une teneur en quartz de 25 à 80 % en masse, de préférence de 30 à 70 % en masse, de manière particulièrement préférée de 30 à 45 % en masse, par rapport à la proportion de matières solides dans la masse de béton frais, et/ou

b) une teneur en chaux vive de 5 à 25 % en masse, de préférence de 10 à 25 % en masse, de manière particulièrement préférée de 15 à 25 % en masse, par rapport à la proportion de matières solides dans la masse de béton frais, et/ou

c) une teneur en boue de retour (matière sèche) de 2 à 35 % en masse, de préférence de 2 à 25 % en masse, de préférence de 2 à 20 % en masse, de manière particulièrement préférée de 2 à 17 % en masse, de manière tout à fait préférée de 10 à 15 % en masse, par rapport à la proportion de matières solides dans la masse de béton frais, et/ou

d) une teneur en farine de béton cellulaire de 0 à 60 % en masse, de préférence de 1 à 30 % en masse, de manière particulièrement préférée de 1 à 12 % en masse, par rapport à la proportion de matières solides dans la masse de béton frais, et/ou

e) une teneur en farine de roche inerte, de préférence en farine de calcaire, de 0 à 20 % en masse, de préférence de 0 à 17 % en masse, par rapport à la teneur en matières solides dans la masse de béton frais.

6. Procédé selon l'une quelconque des revendications précédentes,
**caractérisé en ce que**
une masse de béton frais contenant un agent d'expansion ou un agent moussant est fabriquée, qui présente avant le moussage ou le gonflement une mesure d'étalement selon DIN EN 12350-5: 2009-08 de 20 à 45 cm, de préférence de 25 à 40 cm.

7. Procédé selon l'une quelconque des revendications précédentes,
**caractérisé en ce que**
une masse de béton frais est fabriquée, qui contient un accélérateur de cristallisation, de préférence en une quantité de 0,5 à 5 % en masse, de préférence de 1 à 3 % en masse, par rapport à la teneur en matières solides dans la masse de béton frais.

8. Procédé selon l'une quelconque des revendications précédentes,
**caractérisé en ce que**
le gâteau de béton cellulaire ou moussé est basculé sur l'un de ses côtés longitudinaux après le raidissement et avant la découpe, le gâteau de béton cellulaire ou moussé étant de préférence basculé sur une paroi longitudinale du moule de coulée et les autres parois du moule de coulée étant ensuite retirées, où de préférence

a) le gâteau de béton cellulaire ou moussé découpé est durci en se tenant debout sur la paroi longitudinale du moule de coulée, ou

b) le gâteau de béton cellulaire ou moussé découpé est basculé en arrière ou à travers après la découpe dans une position couchée et est de préférence durci dans la position couchée, une couche de fond du gâteau de béton cellulaire ou moussé étant de préférence enlevée après le basculement en arrière ou à travers, ou

c) le gâteau de béton cellulaire ou moussé découpé est basculé en arrière ou à travers après la découpe dans une position couchée, après le basculement en arrière ou à travers une couche de fond du gâteau de béton cellulaire ou moussé est enlevée et le gâteau de béton cellulaire ou moussé est ensuite basculé en arrière à nouveau dans une position debout et est de préférence durci dans la position debout.

9. Procédé selon l'une des revendications 1 à 7,
**caractérisé en ce que**
après le raidissement du gâteau de béton cellulaire ou moussé, le gâteau de béton cellulaire ou moussé vert est soulevé et déplacé, en particulier déposé sur le support de coupe respectif, où de préférence

a) après le raidissement, des parois latérales du moule sont rabattues, de sorte que le gâteau de béton cellulaire ou moussé se trouve sur une face inférieure du moule de coulée et ensuite le gâteau de béton cellulaire ou moussé vert est saisi, soulevé et déplacé, de préférence par ses côtés longitudinaux, à l'aide d'un grappin, ou

b) après le raidissement du gâteau de béton cellulaire ou moussé, les parois latérales du moule de coulée sont détachées, de sorte que le gâteau de béton cellulaire ou moussé se trouve sur la face inférieure du moule de coulée, et ensuite le gâteau de béton cellulaire ou moussé vert est grippé, soulevé et déplacé par un grappin par l'intermédiaire de ses côtés longitudinaux en utilisant les parois latérales comme mâchoires de grippage, ou

c) après le raidissement du gâteau de béton cellulaire ou moussé, les parois latérales du moule de coulée reliées entre elles sont détachées de la face inférieure du moule, de sorte que le gâteau de béton cellulaire ou moussé se trouve sur la face inférieure du moule de coulée et qu'un caisson ouvert vers le bas et vers le haut est formé, et ensuite le gâteau de béton cellulaire ou moussé vert est soulevé et déplacé en saisissant les quatre parois latérales reliées entre elles du moule de coulée et avec un aspirateur à vide qui est placée sur la face supérieure du caisson et qui aspire le gâteau de béton cellulaire ou moussé.

10. Procédé selon l'une quelconque des revendications précédentes,
**caractérisé en ce que**

a) des corps moulés en béton cellulaire ou moussé sont fabriqués, qui présentent lors de la lixiviation une concentration de sulfate ≤ 100 mg/l, de préférence ≤ 50 mg/l, de sulfate dans le lixiviat selon DIN 12457-4:2003-01 (DEV S 4), et/ou

b) des corps moulés en béton cellulaire ou moussé avec une teneur en 11Å tobermorite, par rapport à la masse sèche du corps moulé en béton cellulaire ou moussé respectif, de 25 à 60 % en masse, de préférence de 30 à 55 % en masse, déterminée par diffractométrie aux rayons X, et/ou

c) des corps moulés en béton cellulaire ou moussé avec une conductivité thermique $\lambda_{10,dry,unit}$ de 0,039 à 0,250 W/(m·K), de préférence de 0,039 à 0,220 W/(m·K), en particulier de 0,039 à 0,130 W/(m·K), selon DIN EN 12664: 2001-05 et DIN EN 12667:2001-05, et/ou

d) des corps moulés en béton cellulaire ou moussé avec une valeur totale du retrait de séchage $\varepsilon_{cs,tot}$ selon DIN EN 680:2006-03 de 0,2 à 0,8 mm/m, de préférence de 0,2 à 0,4 mm/m, et/ou

e) des corps moulés en béton cellulaire ou moussé avec une masse volumique sèche $\rho_0$ de 70 à 800 kg/m$^3$, de préférence de 85 à 600 kg/m$^3$, selon la norme DIN EN 772-13: 2000-09, et/ou

f) des corps moulés en béton cellulaire ou moussé avec une teneur en humidité d'adsorption $u_{m,80}$ de 2 à 8 % en masse, de préférence de 3 à 5 % en masse, en particulier de préférence de 2,5 à 4,5 % en masse selon DIN EN ISO 12571: 2013-12, et/ou

g) des corps moulé en béton cellulaire ou moussé avec une résistance à la compression de 0,1 à 10 N/mm$^2$, de préférence de 0,15 à 6 N/mm$^2$,

sont fabriqués.

**11.** Procédé selon l'une quelconque des revendications précédentes, **caractérisé en ce que**

des corps moulés en béton cellulaire ou moussé avec un nombre A
entre 300 et 2600 [-], ou
entre 1000 et 2600 [-], ou
entre 1000 et 2200 [-], ou
entre 1000 et 2000 [-], ou
entre 600 et 2000 [-], ou
de préférence entre 1000 et 1800 [-],
sont fabriqués,
où le nombre A est calculé comme suit:

nombre A [ - ] = résistance à la compression [N/mm$^2$] / ((masse volumique sèche [kg/dm$^3$])$^2$ · 0,016 [Ndm$^6$/mm$^2$kg$^2$])

**12.** Procédé selon l'une quelconque des revendications précédentes, **caractérisé en ce que**

des briques en béton cellulaire ou moussé

a) avec une conductivité thermique $\lambda_{10,dry,unit}$ de 0,082 à 0,250 W/(m·K), de préférence de 0,085 à 0,160 W/(m·K), en particulier de 0,088 à 0,130 W/(m·K), selon DIN EN 12664: 2001-05, et/ou

b) avec une masse volumique sèche $\rho_0$ de 220 à 800 kg/m$^3$, de préférence de 255 à 600 kg/m$^3$, selon la norme DIN EN 772-13: 2000-09, et/ou

c) avec une résistance à la compression de 1,5 à 10 N/mm$^2$, de préférence de 1,5 à 6 N/mm$^2$, selon la norme DIN EN 772-1: 2011-07,

sont fabriqués.

**13.** Procédé selon l'une des revendications 1 à 11, **caractérisé en ce que**

éléments de construction en béton cellulaire ou moussé armé

a) avec une masse volumique sèche $\rho_0$ de 220 à 800 kg/m$^3$, de préférence de 255 à 600 kg/m$^3$, selon la

norme DIN EN 678:1993, et/ou

b) avec une résistance à la compression de 1,5 à 10 N/mm$^2$, de préférence de 1,5 à 6 N/mm$^2$, selon DIN EN 679:2005-09,

sont fabriqués.

14. Procédé selon l'une des revendications 1 à 11,
**caractérisé en ce que**

a) des corps isolants en béton cellulaire ou moussé avec une conductivité thermique $\lambda_{10,dry,unit}$ de 0,039 à 0,050 W/(m·K), de préférence de 0,039 à 0,045 W/(m·K), en particulier de 0,039 à 0,042 W/(m·K), selon DIN EN 12667:2001-05, et/ou

b) des corps isolants en béton cellulaire ou moussé, en particulier des plaques isolantes en béton cellulaire ou moussé, avec une masse volumique sèche $\rho_0$ de 70 à 150 kg/m$^3$, de préférence de 85 à 115 kg/m$^3$, selon DIN EN 1602: 2013-05, et/ou

c) des corps isolants en béton cellulaire ou moussé, en particulier des plaques isolantes en béton cellulaire ou moussé, avec une résistance à la compression de 0,1 à 0,6 N/mm$^2$, de préférence de 0,15 à 0,4 N/mm$^2$, selon DIN EN 826:2013, et conditionnement à 40°C pour obtenir une masse constante,

sont fabriqués.

<u>Figur 1:</u>

## Figur 2:

## Figur 3:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9802391 A1
- CN 102757211 A
- EP 2371783 A1
- CN 104628416 A
- CN 107963903 A
- CN 106045561 A
- WO 2009121635 A1
- CH 499469
- EP 3235794 A1
- RU 2159754 C2
- DE 102006038743 A1
- EP 1072566 A1
- DE 19854477 A1
- DE 10141864 A1
- DE 19633447 A1
- EP 2189262 A1

**In der Beschreibung aufgeführte Nicht-Patentliteratur**

- *Schober ZKG International H.7*, 2005, vol. 58, 63ff